(19) Europäisches Patentamt / European Patent Office / Office européen des brevets

(11) **EP 4 115 972 A1**

(12) **EUROPEAN PATENT APPLICATION**
published in accordance with Art. 153(4) EPC

(43) Date of publication:
**11.01.2023 Bulletin 2023/02**

(21) Application number: **21765029.0**

(22) Date of filing: **03.02.2021**

(51) International Patent Classification (IPC):
*B01J 20/20* (2006.01)  *B01J 20/28* (2006.01)
*B01J 20/34* (2006.01)  *C02F 1/28* (2006.01)
*C02F 1/461* (2006.01)  *C02F 1/48* (2006.01)
*C02F 1/72* (2006.01)

(52) Cooperative Patent Classification (CPC):
**B01J 20/20; B01J 20/28; B01J 20/34; C02F 1/28; C02F 1/461; C02F 1/48; C02F 1/72**

(86) International application number:
**PCT/JP2021/003858**

(87) International publication number:
**WO 2021/176929 (10.09.2021 Gazette 2021/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.03.2020 JP 2020038554**
**18.07.2020 JP 2020123338**

(71) Applicant: **Sony Group Corporation**
**Minato-Ku, Tokyo, 108-0075 (JP)**

(72) Inventors:
• **TABATA, Seiichiro**
**Tokyo 108-0075 (JP)**
• **VAN DEN BERG, Jan Jasper**
**1015 Lausanne (CH)**
• **BEARD, Tim**
**London (GB)**

(74) Representative: **D Young & Co LLP**
**120 Holborn**
**London EC1N 2DY (GB)**

(54) **UNWANTED SUBSTANCE REMOVAL DEVICE AND METHOD FOR REMOVING UNWANTED SUBSTANCE, AND SEPARATION DEVICE AND SEPARATION METHOD**

(57)     An unwanted matter removal device includes a removal tank 10, a pair of electrodes 31A and 31B disposed in the removal tank 10, a flow path 40 composed of the pair of electrodes 31A and 31B, a Fenton's reagent introduction portion that introduces a Fenton's reagent into the flow path, a liquid introduction portion that introduces a liquid containing an unwanted matter that should be removed into the flow path and a liquid discharge portion that discharges the liquid from the flow path, and the pair of electrodes 31A and 31B are composed of comb-like electrodes.

Fig. 2

**Description**

[Technical Field]

The present disclosure relates to an unwanted matter removal device and an unwanted matter removal method for removing an unwanted matter that should be removed from liquid containing the unwanted matter and relates to a separation device and a separation method for separating a substance that should be separated from liquid containing the matter.

[Background Art]

As one of removal methods for removing an unwanted matter that should be removed from liquid containing the unwanted matter, known is a method in which a liquid containing an unwanted matter that should be removed is passed through a filter composed of activated carbon and the unwanted matter is adsorbed to the activated carbon. In such a method, there is a need to recycle the activated carbon to which the unwanted matter has been adsorbed. As a recycling method, there is a method in which activated carbon is heated and recycled in a low-oxygen gas atmosphere, which has a problem of low performance recovery of the activated carbon. In addition, there is also a method in which activated carbon is heated and recycled in a high-oxygen gas atmosphere, which has a problem in that micropores in the activated carbon are affected by heating and recycling and performance deterioration is likely to occur.

Another method as the removal methods for removing an unwanted matter that should be removed from liquid containing the unwanted matter, known is a method based on the following Fenton reaction in which a Fenton's reagent is used. The superscript "*" indicates a radical.

$$Fe^{2+} + H_2O_2 \rightarrow Fe^{3+} + OH^* + OH^-$$

$$OH^* + Fe^{2+} \rightarrow OH^- + Fe^{3+}$$

$$Fe^{3+} + H_2O_2 \rightarrow Fe\text{-}OOH^{2+} + H^+$$

$$Fe\text{-}OOH^{2+} \rightarrow Fe^{2+} + HO_2{}^*$$

$$Fe^{2+} + HO_2{}^* \rightarrow Fe^{3+} + HO^-$$

$$Fe^{3+} + HO_2{}^* \rightarrow Fe^{2+} + O_2 + H^+$$

$$OH^* + H_2O_2 \rightarrow H_2O + HO_2{}^*$$

$$\text{Organic substance} + OH^* \rightarrow H_2O + \text{product} \dots \qquad (1)$$

$$2Fe^{2+} + H_2O_2 + 2H^+ \rightarrow 2Fe^{3+} + 2H_2O$$

In the formula (1), the "organic substance" is an unwanted matter that should be removed, a product is generated according to the formula (1), this product substitutes the "organic substance" in the left side of the formula (1), the formula (1) repetitively progresses in turn, and, finally, the unwanted matter is decomposed into, for example, $CO_2$ and water or decomposed into a low-molecular-weight nitrogen compound and water.

Electro-Fenton reaction, which is a combination of an electrochemical reaction and the Fenton reaction, is also known (for example, refer to PCT International Publication No. WO 2017/014695A1). In Electro-Fenton reaction, a liquid containing an unwanted matter that should be removed flows between a positive electrode and a negative electrode. In addition, in the negative electrode, based on a reaction of

$$O_2 + 2H^+ + 2e^- \rightarrow H_2O_2,$$

$H_2O_2$ is generated.

In addition, known is a removal method or separation method in which a liquid passing-type capacitor is composed of two electrodes, and a liquid containing an unwanted matter that should be removed or a liquid containing a substance that should be separated is caused to flow between the two electrodes with a voltage applied to the two electrodes, thereby adsorbing the unwanted matter to the electrodes or adsorbing the substance to the electrodes.

[Citation List]

[Patent Literature]

[PTL 1]
WO 2017/014695A1

[Summary]

[Technical Problem]

In the above-described method, the electrodes play an important role in order to highly efficiently remove or separate substances. However, in the technique disclosed in the above-described PCT international publication, it is hard to say that the configuration and structure of an electrode have been optimized.

Therefore, objects of the present disclosure are to provide an unwanted matter removal device enabling the highly efficient removal of unwanted matters, an unwanted matter removal method in which such an unwanted matter removal device is used and to provide a separation device enabling the highly efficient separation of substances and a separation method in which such a device is used.

[Solution to Problem]

An unwanted matter removal device according to a first aspect of the present disclosure for achieving the above-described object includes

a removal tank,
a pair of electrodes disposed in the removal tank,
a flow path composed of the pair of electrodes,
a Fenton's reagent introduction portion that introduces a Fenton's reagent into the flow path,
a liquid introduction portion that introduces a liquid containing an unwanted matter that should be removed into the flow path, and
a liquid discharge portion that discharges the liquid from the flow path,
in which the pair of electrodes are composed of comb-like electrodes.

An unwanted matter removal device according to a second aspect of the present disclosure for achieving the above-described object includes

a removal tank,
a pair of electrodes disposed in the removal tank,
a flow path composed of the pair of electrodes,
a Fenton's reagent introduction portion that introduces a Fenton's reagent into the flow path,
a liquid introduction portion that introduces a liquid containing an unwanted matter that should be removed into the flow path, and
a liquid discharge portion that discharges the liquid from the flow path,
in which at least one of the pair of electrodes is composed of a base portion and an electrode layer containing a porous carbon material provided on a surface of the base portion.

An unwanted matter removal method according to the first aspect of the present disclosure for achieving the above-described object is a removal method in which the unwanted matter removal device according to the first aspect of the present disclosure or an unwanted matter removal device according to the second aspect of the present disclosure is used,

in which the liquid is introduced into the flow path from the liquid introduction portion, the unwanted matter that should be removed is adsorbed to the electrodes, then,
the Fenton's reagent is introduced into the flow path into the flow path from the Fenton's reagent introduction portion with a voltage applied to the pair of electrodes, and the unwanted matter that should be removed attached to the electrodes is decomposed.

It is also possible to introduce the liquid into the flow path from the liquid introduction portion and adsorb the unwanted matter that should be removed to the electrodes with a voltage applied to the pair of electrodes.

An unwanted matter removal method according to the second aspect of the present disclosure for achieving the above-described object is a removal method in which the unwanted matter removal device according to the first aspect of the present disclosure or the unwanted matter removal device according to the second aspect of the present disclosure is used,

the liquid is introduced into the flow path from the liquid introduction portion with a voltage applied to the pair of electrodes, the Fenton's reagent is introduced into the flow path into the flow path from the Fenton's reagent introduction portion, and the unwanted matter that should be removed in the liquid is decomposed.

A separation device according to the present disclosure for achieving the above-described object includes

a separation tank,
a pair of electrodes disposed in the separation tank,
a flow path composed of the pair of electrodes,
a liquid introduction portion that introduces a liquid containing a substance that should be separated into the flow path, and
a liquid discharge portion that discharges the liquid from the flow path, and a power supply device that applies a voltage to the pair of electrodes,
in which the pair of electrodes are composed of comb-like electrodes, and at least one electrode contains a porous carbon material.

A separation method according to the present disclosure for achieving the above-described object is a separation device in which a separation device including

a separation tank,
a pair of electrodes disposed in the separation tank,
a flow path composed of the pair of electrodes,
a liquid introduction portion that introduces a liquid containing a substance that should be separated into the flow path,
a liquid discharge portion that discharges the liquid from the flow path, and
a power supply device that applies a voltage to the pair of electrodes,
in which the pair of electrodes are composed of comb-like electrodes, and
at least one electrode contains a porous carbon material, is used,
in which a voltage is applied to the pair of electrodes from the power supply device, the liquid is introduced into the flow path from the liquid introduction portion, and an electric double layer is formed between the substance that should be separated and at least one electrode, whereby the substance that should be separated is separated from the liquid in a vicinity of the electrode in which the electric double layer has been formed.

[Brief Description of Drawing]

[Fig. 1]

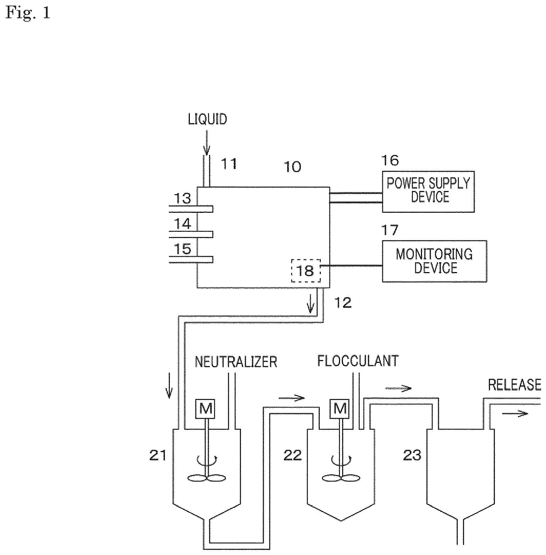

Fig. 1 is a conceptual view of an unwanted matter removal device of Example 1.
[Fig. 2]

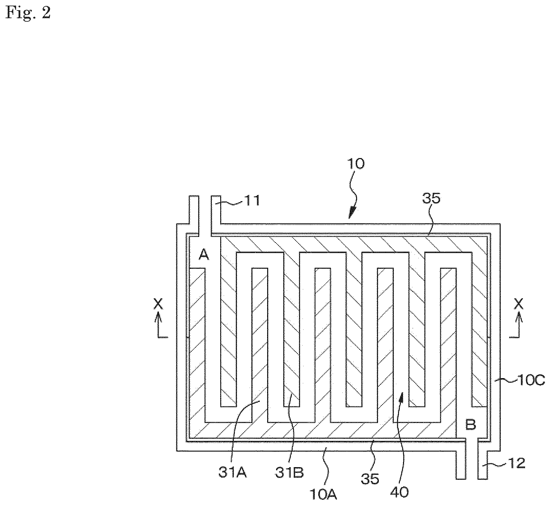

Fig. 2 is a conceptual view of electrodes and a flow path in the unwanted matter removal device of Example 1 (unwanted matter removal devices according to a first aspect and a second aspect of the present disclosure).
[Fig. 3]

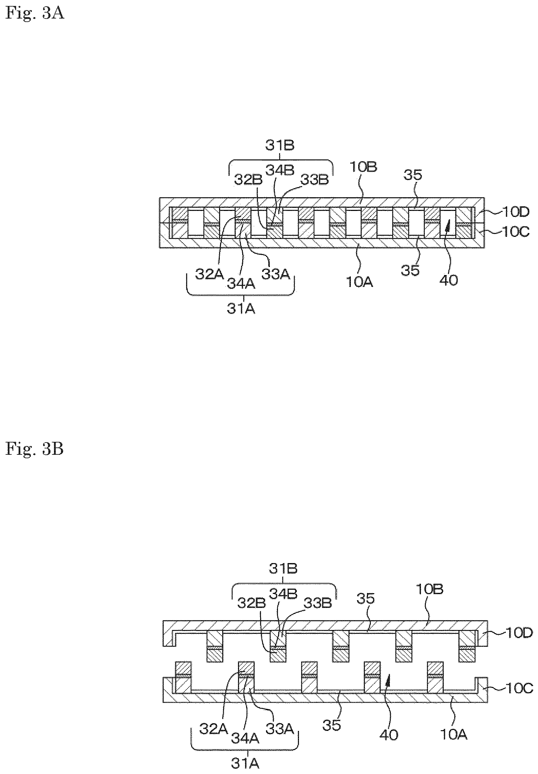

Fig. 3A and Fig. 3B are schematic partial cross-sectional views of the electrodes in the unwanted matter removal device of Example 1 (electrodes in the unwanted matter removal device according to the first aspect of the present disclosure).
[Fig. 4]

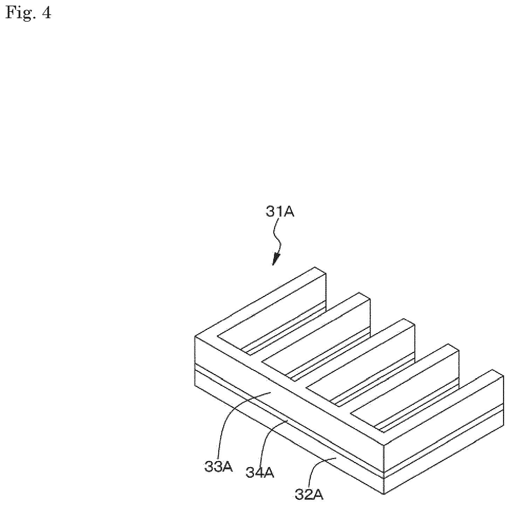

Fig. 4 is a schematic perspective view of the electrodes in the unwanted matter removal device of Example 1.
[Fig. 5]

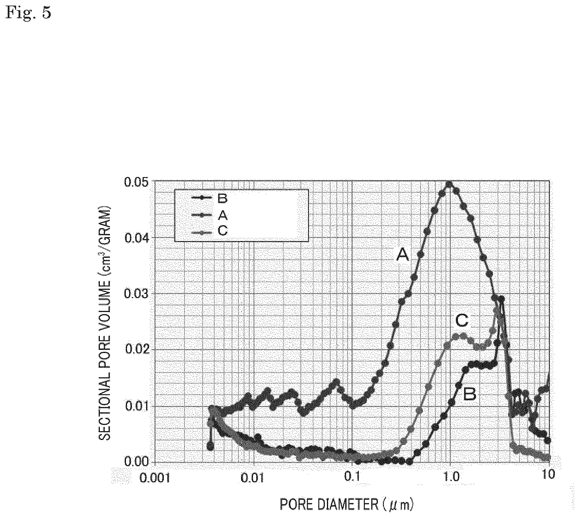

Fig. 5 is a graph showing the pore distribution of porous carbon materials used in Example 1 or Example 3.
[Fig. 6]

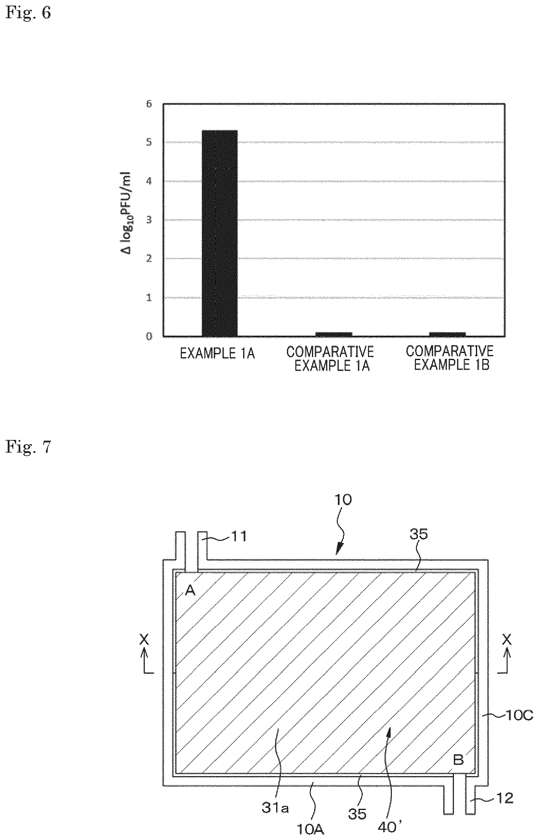

Fig. 6 is a graph showing the results of adsorption tests (removal evaluation tests) of a bacteriophage MS2 carried out using the unwanted matter removal device of Example 1.
[Fig. 7]
Fig. 7 is a conceptual view of the electrodes and the flow path in the unwanted matter removal device of Example 1 (the unwanted matter removal device according to the second aspect).
[Fig. 8]

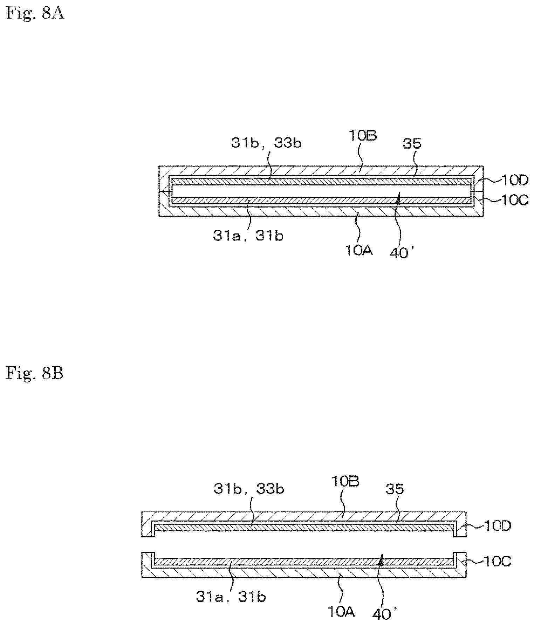

Fig. 8A and Fig. 8B are schematic partial cross-sectional views of the electrodes in the unwanted matter removal device of Example 1 (electrodes in the unwanted matter removal device according to the second aspect of the present disclosure).

[Description of Embodiments]

Hereinafter, the present disclosure will be described on the basis of examples with reference to the drawings. However, the present disclosure is not limited to the examples, and various numerical values and materials in the examples are examples. The description will be given in the following order.

1. General description of unwanted matter removal devices according to a first aspect and a second aspect of the present disclosure and unwanted matter removal methods according to the first aspect and the second aspect of the present disclosure
2. Example 1 (the unwanted matter removal devices according to the first aspect and the second aspect of the present disclosure and the unwanted matter removal method according to the first aspect of the present disclosure)
3. Example 2 (the unwanted matter removal method according to the second aspect of the present disclosure)
4. Example 3 (a separation device and a separation method of the present disclosure)
5. Others

<General description of unwanted matter removal devices according to first aspect and second aspect of present disclosure, unwanted matter removal methods according to first aspect and second aspect of present disclosure, separation device of the present disclosure and separation method of present disclosure>

Hereinafter, an unwanted matter removal device according to a first aspect of the present disclosure and an unwanted matter removal device according to the first aspect of the present disclosure that is suitably used in an unwanted matter removal method according to the first aspect of the present disclosure will be collectively referred to as "the unwanted matter removal device and the like according to the first aspect of the present disclosure" in some cases. In addition, hereinafter, an unwanted matter removal device according to a second aspect of the present disclosure and an unwanted matter removal device according to the second aspect of the present disclosure that is suitably used in an unwanted matter removal method according to the second aspect of the present disclosure will be collectively referred to as "the unwanted matter removal device and the like according to the second aspect of the present disclosure" in some cases. Furthermore, the unwanted matter removal devices according to the first aspect and the second aspect of the present disclosure and the unwanted matter removal devices according to the first aspect and the second aspect of the present disclosure that are suitably used in the unwanted matter removal methods according to the first aspect and the second aspect of the present disclosure will be collectively referred to as "the unwanted matter removal device and the like of the present disclosure" in some cases. In addition, hereinafter, a separation device of the present disclosure and a separation device of the present disclosure that is suitably used in a separation method of the present disclosure will be collectively referred to as "the separation device and the like of the present disclosure" in some cases. An unwanted matter that should be removed and a substance that should be separated will be collectively referred to as "unwanted matter and the like" in some cases.
In the unwanted matter removal device and the like of the present disclosure, a Fenton's reagent introduction portion can be formed to include an introduction portion that introduces a gas or liquid containing an oxygen atom into a flow path. Examples of the gas or liquid containing an oxygen atom include hydrogen peroxide gas and hydrogen peroxide water. The Fenton's reagent is composed of the gas or liquid containing an oxygen atom and an iron catalyst. For example, in the case of using the Fenton's reagent composed of a mixture of hydrogen peroxide water and an iron catalyst, the mixture of hydrogen peroxide water and the iron catalyst may be introduced together into the flow path from the Fenton's reagent introduction portion. On the other hand, in a case where hydrogen peroxide water and an iron catalyst are separately prepared, the iron catalyst may be introduced into the flow path from the Fenton's reagent introduction portion, and the hydrogen peroxide water may be introduced into the flow path from the introduction portion.
The unwanted matter removal device and the like of the present disclosure including the above-described preferable form can be formed to further include a power supply device that applies a voltage to a pair of electrodes.
Furthermore, the unwanted matter removal device and the like of the present disclosure including a variety of the preferable forms described above can be formed to further include a pH adjuster introduction portion that introduces a pH adjuster for adjusting the pH of the liquid into the flow path. Specific examples of the pH adjuster include lactic acid, carbon dioxide, succinic acid, gluconic acid, citric acid, phosphoric acid, potassium carbonate, sodium hydrogen carbonate and the like. When the liquid is made acidic by introducing the pH adjuster into the flow path, it is possible to promote a Fenton reaction. The same effect can be obtained even by introducing, instead of the pH adjuster, an oxygen gas into the liquid. Depending on the situation, the separation device and the like of the present disclosure can also be formed to further include the pH adjuster introduction portion that introduces the pH adjuster for adjusting the pH of the liquid into a flow path.

Furthermore, the unwanted matter removal device and the like of the present disclosure including a variety of the preferable forms described above or the separation device and the like of the present disclosure can also be formed to further include a monitoring device that monitors the characteristics of the liquid that is discharged from a liquid discharge portion. Here, examples of the characteristics of the liquid that should be monitored include whether or not to an organic matter is contained, the kind of the organic matter, the concentration of an ion, the kind of the ion, the concentration of a gas, the kind of the gas and the like, and examples of the monitoring device include an ion concentration sensor, an organic matter sensor, a bio sensor, a gas sensor and the like.

Furthermore, in the unwanted matter removal device and the like according to the first aspect of the present disclosure including a variety of the preferable forms described above or the separation device and the like of the present disclosure, each electrode can be formed to include a base portion and an electrode layer provided on a surface of the base portion. In addition, in this case or in the unwanted matter removal device and the like according to the second aspect of the present disclosure including a variety of the preferable forms described above,

an electrode layer configuring one of the pair of electrodes can be configured to contain a porous carbon material, an electrode layer configuring the other of the pair of electrodes can be configured to contain at least one kind of material selected from the group consisting of conductive organic matters and the like such as diamond-like carbon, glassy carbon, carbon fibers, carbon nanotubes, graphene, carbon fibers, activated carbon, carbon black, boron-doped carbon, materials including a metal atom of platinum (Pt), gold (Au), silver (Ag), platinum black, stainless steel or the like and conductive polymers (hereinafter, referred to as "carbon-based material" in some cases) or an electrode layer configuring each of the pair of electrodes can be configured to contain a porous carbon material. The porous carbon material may be powdery or granular. Depending on the situations, in the unwanted matter removal device and the like according to the first aspect of the present disclosure or the separation device and the like of the present disclosure, the electrode layer configuring each of the pair of electrodes can be configured to contain the carbon-based material. A value $S_{BET-1}$ of the surface area based on the nitrogen BET method of a material configuring the electrode layer for one of the pair of electrodes and a value $S_{BET-2}$ of the surface area based on the nitrogen BET method of a material configuring the electrode layer for the other of the pair of electrodes preferably satisfy the following relationship.

$$1 \leq S_{BET\text{-}1}/S_{BET\text{-}2} \leq 10$$

In addition, the difference between the area of an orthographic image of the electrode layer for one of the pair of electrodes on the base portion and the area of an orthographic image of the electrode layer for the other on the base portion is desirably as close to "0" as possible. Since the capacity of an electric double layer to be formed is limited by the electrode layer having a smaller area, the areas of the two electrode layers are preferably set to be as equal to each other as possible. Specifically, a value $S_{OI-1}$ of the area of the orthographic image of the electrode layer for one of the pair of electrodes on the base portion and a value $S_{OI-2}$ of the area of the orthographic image of the electrode layer for the other on the base portion preferably satisfy the following relationship while the values are not limited thereto.

$$0.8 \leq S_{OI\text{-}1}/S_{OI\text{-}2} \leq 1.2$$

Here, it is preferable that a total pore volume $V_{Total}$ of the porous carbon material is 1.0 cm$^3$/gram to 2.0 cm$^3$/gram, a pore volume $V_{Macro}$ of 0.1 $\mu$m to 2.0 $\mu$m is 0.3 cm$^3$/gram to 1.0 cm$^3$/gram, and the volumes satisfy $0.05 \leq V_{Macro}/V_{Total} \leq 1.0$. Examples of a measurement method of the total pore volume $V_{Total}$ and the pore volume $V_{Macro}$ of 0.1 pm to 2.0 pm include a mercury intrusion method. The total pore volume $V_{Total}$ that is measured based on the mercury intrusion method refers to the volume of pores of 0.03 pm to 10.0 pm. The measurement of pores by the mercury intrusion method complies with JIS R1655: 2003 "Test methods for pore size distribution of fine ceramic green body by mercury porosimetry".

Pores having a pore diameter of smaller than 2 nm are referred to as "micropores", pores having a pore diameter of 2 nm to 50 nm are referred to as "mesopores", and pores having a pore diameter of more than 50 nm are referred to as "macropores". The pore diameters of the micropores can be calculated as distribution of pores from pore volume change rates with respect to the pore diameters based on, for example, an MP method. The pore diameters of the mesopores can be calculated as distribution of pores from pore volume change rates with respect to the pore diameters based on, for example, a BJH method. The pore diameters of the macropores can be obtained based on, for example, the mercury intrusion method.

Furthermore, the unwanted matter removal device and the like of the present disclosure including a variety of preferable forms and configurations described above can be formed to further include

a neutralization tank that neutralizes the liquid discharged from the liquid discharge portion,
a flocculation tank that flocculates a solid matter in the liquid discharged from the neutralization tank, and
a settlement tank that settles the solid matter flocculated in the flocculation tank.

Depending on the situations, the separation device and the like of the present disclosure including a variety of preferable forms and configurations described above may include the neutralization tank, the flocculation tank and the settlement tank.

The configurations and structures of the neutralization tank, the flocculation tank and the settlement tank need to be the same as the configurations and structures of neutralization tanks, flocculation tanks and settlement tanks that are used for conventional water treatments and the like. As a neutralizer for neutralizing the liquid, a chemical suitable for neutralizing the liquid needs to be used. As a flocculant for flocculating the solid matter in the liquid, inorganic flocculants such as aluminum salts such as aluminum sulfate and polyaluminum chloride (PAC), ferric chlorides, polyferric sulfate (poly iron), ferrous sulfate and slaked lime (calcium hydroxide) can be used, and polymer flocculants (polymers) such as anionic polymer flocculants, nonionic polymer flocculants and cationic polymer flocculants can be used. Alternatively, as the flocculant, an inorganic matter such as an inorganic salt, an acid, an alkali, a metal electrolyte or active silicic acid, an anionic or cationic surfactant or the like, which are normally used, may be appropriately selected depending on the kind of a liquid that should be treated or the treatment method of the liquid. The flocculant the flocculant can be dissolved, dispersed in a solvent or added in an intrinsic granular form to the liquid. If necessary, a flocculation aid, a settlement aid or a flotation aid can also be used.

In the unwanted matter removal device and the like of the present disclosure or the separation device and the like of the present disclosure, a material that configures the base portion needs to be a material that does not cause any damage depending on a variety of chemicals and the like being used, and examples thereof include metal-based materials such as stainless steel, silicon nitride, zirconia, silicon carbide, titanium, chromium, nickel and tantalum and a variety of resins such as a polyethylene resin, a polypropylene resin, a nylon resin, an ABS resin, a vinylidene chloride resin, a phenol resin, a furan resin, a melamine resin, a fluororesin and a polycarbonate resin. The base portion may have a flat shape or a comb-like protrusion and recess portion for providing comb-like electrodes may be formed on the inner surface of the base portion. In addition, side walls may be formed on the outer circumferential portion of the base portion. A number of base portions may be laminated or arranged to configure a three-dimensional flow path. That is, the device can be configured as follows: a flow path is configured with comb-like electrodes between a base portion and another base portion, a number of such configurations are laminated or arranged, and the flow paths are linked (made to communicate) together.

In the electrode layer (porous carbon material layer or carbon-based material layer) provided on the surface of the base portion, a binder suitable for the porous carbon material or the carbon-based material being used may be contained in order to shape the porous carbon material or the carbon-based material. In addition, the electrode layer (porous carbon material layer or carbon-based material layer) provided on the surface of the base portion can also be configured to contain a polymer complex composed of the porous carbon material or the carbon-based material and a polymer.

A material that configures the binder also needs to be a material that does not cause any damage depending on a variety of chemicals and the like being used such as the liquid or the unwanted matter. The material that configures the binder may be appropriately selected from carboxynitrocellulose, a urea resin, a melamine resin, a phenol resin, an epoxy resin, a polyurethane-based resin, a resorcin-based resin, a vinyl acetate resin, a polyvinyl alcohol resin, a polyethylene resin, a polyester resin, a polystyrene resin, a poly(meth)acrylic resin, a poly(meth)acrylic acid ester resin, a fluororesin, a (meth)acrylic acid/styrene copolymer resin, an ethylene/vinyl acetate copolymer resin, a vinyl acetate/(meth) acrylic copolymer resin, an ethylene/vinyl acetate/(meth)acrylic ternary copolymer resin and the like. In addition, two or more kinds of binders may be jointly used.

As a raw material of the porous carbon material, a plant-derived material can be used. Such a porous carbon material is referred to as "plant-derived porous carbon material". Examples of the plant-derived material include the rice husks or straws of rice (rice bran), barley, wheat, rye, Japanese millet, millet and the like, coffee beans, tea leaves (for example, leaves of green tea, black tea and the like), sugar canes (more specifically, strained lees of sugar canes), corns (more specifically, corn cores), fruit skins (for example, orange skins, grapefruit skins, citrus skins such as tangerine skins, banana skins, and the like), alternatively, reeds, and seaweed canes, but the plant-derived material is not limited thereto, and, additionally, examples thereof include vascular plants, pteridophyte, bryophyte, algae and seaweed that vegetate on land. As the raw material, these materials may be used singly or a plurality of kinds of these materials may be mixed and used. In addition, the shape or form of the plant-derived material is also not particularly limited, and the plant-derived material may be, for example, a rice husk or a straw itself or may be a dried product. Furthermore, plant-derived materials that have undergone a variety of treatments such as a fermentation treatment, a roasting treatment and an extraction treatment in a food and beverage process of bear, whisky or the like can also be used. In particular, from the viewpoint of recycling industrial wastes, a straw or a rice husk after a process such as grain thrashing is preferably used. This processed straw or rice husk can be easily procured in large quantities from, for example, agricultural cooperative societies, liquor manufacturers, food companies or food-processing companies.

In a case where a plant-derived material containing silicon (Si) is used as the raw material of the plant-derived porous carbon material, specifically, it is desirable that, for the plant-derived porous carbon material, a plant-derived material having a silicon (Si) content rate of 5 mass% or more is used as the raw material and the silicon (Si) content rate is 5 mass% or less, preferably 3 mass% or less and more preferably 1 mass% or less while the raw material is not limited thereto.

The plant-derived porous carbon material can be obtained by, for example, carbonizing a plant-derived material at 400°C to 1400°C and then treating the plant-derived material with an acid or an alkali. In such a production method of the plant-derived porous carbon material (hereinafter, simply referred to as "the production method of the porous carbon material" in some cases), the material that has been obtained by carbonizing a plant-derived material at 400°C to 1400°C, but is to be treated with an acid or an alkali will be referred to as "porous carbon material precursor" or "carbonaceous substance".

In the production method of the porous carbon material, after the treatment with an acid or an alkali, a step of carrying out an activation treatment can be included, and the treatment with an acid or an alkali may be carried out after the activation treatment. In addition, in the production method of the porous carbon material including such a preferable form, while also depending on a plant-derived material being used, a heating treatment (preliminary carbonization treatment) may be carried out on the plant-derived material at a temperature lower than the temperature for the carbonization (for example, 400°C to 700°C) in a state where oxygen is blocked before the carbonization of the plant-derived material. This makes it possible to extract a tar component that may be generated in the carbonization process and, consequently, to reduce or remove the tar component that may be generated in the carbonization process. The state where oxygen is blocked can be achieved by, for example, forming an inert gas atmosphere filled with nitrogen gas or argon gas, forming a vacuum atmosphere or putting the plant-derived material into a kind of steamed state. In addition, in the production method of the porous carbon material, while depending on a plant-derived material being used, in order to reduce a mineral component or moisture that is contained in the plant-derived material or to prevent the generation of an abnormal odor in the carbonization process, the plant-derived material may be immersed in an alcohol (for example, methyl alcohol, ethyl alcohol or isopropyl alcohol). In the production method of the porous carbon material, after that, a preliminary carbonization treatment may be carried out. Examples of a preferable material on which the heating treatment is carried out in the inert gas include plants from which a large amount of pyroligneous acid (tar or a light petroleum oil component) is generated. In addition, examples of a preferable material on which the pretreatment is carried out with an alcohol include marine algae containing a large amount of iodine or a variety of minerals.

In the production method of the porous carbon material, the plant-derived material is carbonized at 400°C to 1400°C, but the carbonization mentioned herein ordinarily means the conversion of an organic substance (the plant-derived material for the plant-derived porous carbon material) to a carbonaceous substance by a heat treatment (for example, refer to JIS M0104-1984). Examples of an atmosphere for the carbonization include oxygen-blocked atmospheres, and specific examples thereof include a vacuum atmosphere, an inert gas atmosphere filled with nitrogen gas or argon gas and an atmosphere in which the plant-derived material is put into a kind of steamed state. A temperature rise rate until the carbonization temperature is reached is not limited, but can be, for example, 1°C/minute or faster, preferably 3°C/minute or faster or more preferably 5°C/minute or faster in such an atmosphere. In addition, the upper limit of a carbonization time can be, for example, 10 hours, preferably seven hours and more preferably five hours, but is not limited thereto. The lower limit of the carbonization time needs to be set to a time long enough for the plant-derived material to be carbonized. In addition, the plant-derived material may be crushed as desired to desired particle sizes or may be classified. The plant-derived material may be cleaned in advance. Alternatively, the obtained porous carbon material precursor or plant-derived porous carbon material may be crushed as desired to desired particle sizes or may be classified. Alternatively, the plant-derived porous carbon material after the activation treatment may be crushed as desired to desired particle sizes or may be classified. Furthermore, a sterilization treatment may be carried out on the plant-derived porous carbon material obtained in the end. The form, configuration and structure of a furnace that is use for the carbonization are not limited, a continuous furnace can be used, and a batch furnace can be used.

In the production method of the porous carbon material, as described above, the activation treatment may be carried out. Examples of a method for the activation treatment include a gas activation method and a chemical activation method. Here, the gas activation method refers to a method in which oxygen, water vapor, carbon dioxide, an air or the like is used as an activator agent, and the plant-derived porous carbon material is heated in such a gas atmosphere at 700°C to 1400°C, preferably 700°C to 1000°C and more preferably 800°C to 1000°C for several tens of minutes to several hours, thereby developing a finer structure with a volatile component or a carbon molecule in the plant-derived porous carbon material. More specifically, the heating temperature needs to be selected as appropriate based on the kind of the plant-derived material, the kind or concentration of the gas or the like. The chemical activation method refers to a method in which the plant-derived porous carbon material is activated using, instead of oxygen or water vapor, which is used in the gas activation method, zinc chloride, iron chloride, calcium phosphate, calcium hydroxide, magnesium carbonate, potassium carbonate, sulfuric acid or the like and cleaned with hydrochloric acid, the pH is adjusted with an alkaline aqueous solution, and the plant-derived porous carbon material is dried.

In the production method of the porous carbon material, a silicon component in the carbonized plant-derived material is removed by the treatment with an acid or an alkali. Here, examples of the silicon component include silicon oxides such as silicon dioxide, silicon oxide and silicon oxide salts. When the silicon component in the carbonized plant-derived material is removed as described above, a plant-derived porous carbon material having a high specific surface area can be obtained. Depending on the situations, the silicon component in the carbonized plant-derived material may be removed based on a dry etching method.

In the plant-derived porous carbon material, a non-metal element such as magnesium (Mg), potassium (K), calcium (Ca), phosphorus (P) or sulfur (S) or a metal element such as a transition element may be contained. The content rate of magnesium (Mg) can be 0.01 mass% or more and 3 mass% or less, the content rate of potassium (K) can be 0.01 mass% or more and 3 mass% or less, the content rate of calcium (Ca) can be 0.05 mass% or more and 3 mass% or less, the content rate of phosphorous (P) can be 0.01 mass% or more and 3 mass% or less, the content rate of sulfur (S) can be 0.01 mass% or more and 3 mass% or less. The content rates of these elements are preferably small from the viewpoint of an increase in the value of the specific surface area. In the plant-derived porous carbon material, an element other than the above-described elements may be contained, and it is needless to say that the ranges of the content rates of a variety of the above-described elements can also be changed.

In the plant-derived porous carbon material, a variety of elements can be analyzed by the energy dispersive spectroscopy (EDS) using, for example, an energy-dispersive X-ray analyzer (for example, JED-2200F manufactured by JEOL Ltd.). Here, as the measurement conditions, for example, the scanning voltage needs to be set to 15 kV, and the illumination current needs to be set to 10 $\mu$A.

In the plant-derived porous carbon material, it is desirable that the value of the specific surface area by the nitrogen BET method (hereinafter, simply referred to as "the value of the specific surface area" in some cases) is preferably 50 $m^2$/gram or more, more preferably 100 $m^2$/gram or more and still more preferably 400 $m^2$/gram or more in order to obtain superior functionality.

The nitrogen BET method is a method in which an adsorption isotherm is measured by adsorbing and desorbing nitrogen to and from an adsorbent (here, a porous carbon material) as an adsorbed molecule and the measured data is analyzed based on a BET formula represented by a formula (1), and the specific surface area, the pore volume or the like can be calculated based on this method. Specifically, in the case of calculating the value of the specific surface area by the nitrogen BET method, first, nitrogen is adsorbed to and desorbed from the porous carbon material as an adsorbed molecule, thereby obtaining an adsorption isotherm. In addition, $[p/\{V_a(p_0 - p)\}]$ is calculated from the obtained adsorption isotherm based on the formula (1) or a formula (1') obtained by modifying the formula (1) and plotted with respect to the equilibrium relative pressure ($p/p_0$). In addition, this plot is regarded as a straight line, and the slope s (= $[(C - 1)/(C \cdot V_m)]$) and the intercept i (= $[1/(C \cdot V_m)]$) are calculated based on the least-square method. In addition, $V_m$ and C are calculated from the obtained slope s and intercept i based on a formula (2-1) and a formula (2-2). Furthermore, the specific surface area $a_{sBET}$ is calculated from $V_m$ based on a formula (3) (refer to the manuals of BELSORP-mini and BELSORP analysis software manufactured by MicrotracBEL Corp., pp. 62 to 66). This nitrogen BET method is a measurement method according to JIS R 1626-1996 "Measuring methods for the specific surface area of fine ceramic powders by gas adsorption using the BET method".

$$V_a = (V_m \cdot C \cdot p)/[(p_0 - p)\{1 + (C - 1)(p/p_0)\}] \ (1)$$

$$[p/\{V_a(p_0 - p)\}]$$
$$= [(C - 1)/(C \cdot V_m)](p/p_0) + [1/(C \cdot V_m)] \ (1')$$

$$V_m = 1/(s + i) \ (2\text{-}1)$$

$$C = (s/i) + 1 \ (2\text{-}2)$$

$$a_{sBET} = (V_m \cdot L \cdot \sigma)/22414 \ (3)$$

Here,

$V_a$: Adsorption amount
$V_m$: Adsorption amount of single molecular layer
p: Pressure at equilibrium of nitrogen
$p_0$: Saturated vapor pressure of nitrogen
L: Avogadro's number
σ: Adsorption cross-sectional area of nitrogen.

In the case of calculating the pore volume $V_p$ by the nitrogen BET method, for example, the adsorption data of the obtained adsorption isotherm is linearly interpolated, and the adsorption amount V at a relative pressure set at a pore volume calculation relative pressure is obtained. The pore volume $V_p$ can be calculated from this adsorption amount V based on a formula (4) (refer to the manuals of BELSORP-mini and BELSORP analysis software manufactured by MicrotracBEL Corp., pp. 62 to 65). Hereinafter, the pore volume based on the nitrogen BET method will be simply referred to as "pore volume" in some cases.

$$V_p = (V/22414) \times (M_g/\rho_g) \ (4)$$

Here,

V: Adsorption amount at relative pressure
$M_g$: Molecular weight of nitrogen
$\rho_g$: Density of nitrogen.

The pore diameters of the mesopores can be calculated as distribution of pores from pore volume change rates with respect to the pore diameters based on, for example, a BJH method. The BJH method is a method that is widely used as a pore distribution analysis method. In the case of carrying out a pore distribution analysis based on the BJH method, first, nitrogen is adsorbed to and desorbed from the porous carbon material as an adsorbed molecule, thereby obtaining an adsorption isotherm. In addition, the thickness of an adsorption layer when an adsorbed molecule (for example, nitrogen) is desorbed stepwise from a state where pores are filled with the adsorbed molecule and the inner diameters (twice the core radii) of pores generated at that time are obtained based on the obtained adsorption isotherm, the pore radii $r_p$ are calculated based on a formula (5), and the pore volume is calculated based on a formula (6). In addition, the pore volume change rate ($dV_p/dr_p$) with respect to pore radii ($2r_p$) is plotted from the pore radii and the pore volume, thereby obtaining a pore distribution curve (refer to the manuals of BELSORP-mini and BELSORP analysis software manufactured by MicrotracBEL Corp., pp. 85 to 88).

$$r_p = t + r_k \ (5)$$

$$V_p n = R_n \cdot dV_n \cdot R_n \cdot dt_n \ c \cdot \Sigma A_{pj} \ (6)$$

Here,

$$R_n = r_{pn}{}^2/(r_{kn} \cdot 1 + dt_n)2 \ (7)$$

Here,

$r_p$: Pore radius

$r_k$: Core radius (inner diameter/2) in a case where an adsorption layer having a thickness t is adsorbed at the pressure to the inner wall of a pore having a pore radius $r_p$.

$V_{pn}$: Pore volume when nth desorption of nitrogen occurs

$dV_n$: Change amount at that time

$dt_n$: Change amount of the thickness tn of the adsorption layer when nth desorption of nitrogen occurs

$r_{kn}$: Core radius at that time

c: Fixed value

$r_{pn}$: Pore radius when nth desorption of nitrogen occurs.

In addition, $\Sigma A_{pj}$ represents the integrated value of the areas of the wall surfaces of pores from j = 1 to j = n - 1.

The pore diameters of the micropores can be calculated as distribution of pores from pore volume change rates with respect to the pore diameters based on, for example, an MP method. In the case of carrying out a pore distribution analysis based on the MP method, first, nitrogen is adsorbed to the porous carbon material, thereby obtaining an adsorption isotherm. In addition, this adsorption isotherm is converted to the pore volume with respect to the thickness t of an adsorption layer (t-plotted). In addition, a pore distribution curve can be obtained based on the curvature (a change amount of the pore volume with respect to a change amount of the thickness t of the adsorption layer) of this plot (refer to the manuals of BELSORP-mini and BELSORP analysis software manufactured by MicrotracBEL Corp., pp. 72 and 73 and p. 82).

The porous carbon material precursor is treated with an acid or an alkali, and examples of a specific treatment method include a method in which the porous carbon material precursor is immersed in an acid or alkali aqueous solution or a method in which the porous carbon material precursor and an acid or an alkali are reacted in a gaseous phase. More specifically, in the case of carrying out the treatment with an acid, examples of the acid include fluorine compounds exhibiting acidity such as hydrogen fluoride, hydrofluoric acid, ammonium fluoride, calcium fluoride and sodium fluoride. In the case of using the fluorine compound, the amount of a fluorine element preferably becomes four times the amount of a silicon element in the silicon component contained in the porous carbon material precursor, and the concentration of a fluorine compound aqueous solution is preferably 10 mass% or more. In the case of removing the silicon component (for example, silicon dioxide) contained in the porous carbon material precursor with hydrofluoric acid, silicon dioxide reacts with the hydrofluoric acid as shown in a chemical formula (A) or a chemical formula (B) and is removed as hexafluorosilicic acid ($H_2SiF_6$) or silicon tetrafluoride ($SiF_4$), and a plant-derived porous carbon material can be obtained. In addition, after that, the plant-derived porous carbon material needs to be cleaned and dried.

$$SiO_2 + 6HF \rightarrow H_2SiF_6 + 2H_2O \qquad (A)$$

$$SiO_2 + 4HF \rightarrow SiF_4 + 2H_2O \qquad (B)$$

In addition, in the case of carrying out the treatment with an alkali (base), examples of the alkali include sodium hydroxide. In the case of using an aqueous solution of an alkali, the pH of the aqueous solution needs to be 11 or higher. In the case of removing the silicon component (for example, silicon dioxide) contained in the porous carbon material precursor with a sodium hydroxide aqueous solution, when the sodium hydroxide aqueous solution is heated, silicon dioxide reacts as shown in a chemical formula (C) and is removed as sodium silicate ($Na_2SiO_3$), and a plant-derived porous carbon material can be obtained. In addition, in a case where sodium hydroxide is reacted and treated in a gaseous phase, the solid of sodium hydroxide is heated and thereby reacts as shown in the chemical formula (C) and is removed as sodium silicate ($Na_2SiO_3$), and a plant-derived porous carbon material can be obtained. In addition, after that, the plant-derived porous carbon material needs to be cleaned and dried.

$$SiO_2 + 2NaOH \rightarrow Na_2SiO_3 + H_2O \qquad (C)$$

Examples of the unwanted matter that should be removed include organic acids (for example, formic acid, gluconic acid, lactic acid, malic acid, propionic acid, and tartaric acid), alcohols (for example, benzyl alcohol, tert-butyl alcohol, ethanol, ethylene glycol, glycerol, isopropanol, methanol, and propanediol), aldehydes (for example, acetaldehyde, benzaldehyde, formaldehyde, glyoxal, isobutylaldehyde and trichloroacetaldehyde), aromatics (for example, benzene, chlorobenzene, chlorophenol, creosote, dichlorophenol, hydroquinone, p-nitrophenol, phenol, toluene, trichlorophenol, xylene and trinitrotoluene), amines (for example, aniline, cyclic amine, diethylamine, dimethylformamide, ethylenediaminetetraacetic acid (EDTA), propanediamine, n-propylamine and hexogen), dyes (for example, anthraquinone, monoazo compounds and diazo compounds), ketones (for example, dihydroxyacetone and methyl ethyl ketone) and ethers (for example, tetrahydrofuran), include viruses or bacteria (for example, viruses belonging to parvoviridae, adenoviridae, papillomaviridae, herpesviridae, poxviridae, hepadnaviridae, rhabdoviridae, paramyxoviridae, orthomyxoviridae, filoviridae, bunyaviridae, arenaviridae, flaviviridae, coronaviridae, togaviridae, retroviridae, caliciviridae, picornaviridae, reoviridae and the like), and, additionally, also include aerobic cocci and bacilli and anaerobic cocci and bacilli in gram-positive bacteria, aerobic cocci and bacilli and anaerobic cocci and bacilli in gram-negative bacteria). Alternatively, examples of the unwanted matter that should be removed include organic substances: metal ions of cesium (Cs) or strontium (Sr); organic molecules such as pyrogen and humic acid, a variety of proteins and bacteria. Alternatively, examples of the unwanted matter that should be removed include organic substances: metal ions of cesium (Cs) or strontium (Sr); organic molecules such as pyrogen and humic acid, a variety of proteins and bacteria and also include colloidal substances composed of a variety of inorganic matters or organic matters and having particle diameters of one or more nanometers (for example, colloidal substances that are contained in ground water or environmental water). The substance that should be separated will be described in Example 3.

[Example 1]

Example 1 relates to the unwanted matter removal devices according to the first aspect and the second aspect of the present disclosure and the unwanted matter removal method according to the first aspect of the present disclosure. A conceptual view of the unwanted matter removal device of Example 1 is shown in Fig. 1, a conceptual view of the electrodes and the flow path is shown in Fig. 2, partial cross-sectional views of the electrodes are shown in Fig. 3A and Fig. 3B, and a schematic perspective view of the electrodes is shown in Fig. 4. In Fig. 1, the flow of the liquid is indicated by arrows, and, in Fig. 2, the electrodes are hatched in order to clearly show the electrodes. Fig. 3A is a schematic cross-sectional view along an arrow X-X in Fig. 2, and Fig. 3B is a view of the vertically-divided schematic cross-sectional view of Fig. 3A.

An unwanted matter removal device of Example 1 includes

a removal tank 10,
a pair of electrodes 31A and 31B (a positive electrode 31A and a negative electrode 31B) disposed in the removal tank 10,
a flow path 40 composed of the pair of electrodes 31A and 31B,
a Fenton's reagent introduction portion 13 that introduces a Fenton's reagent into the flow path 40,
a liquid introduction portion 11 that introduces a liquid (specifically, for example, water) containing an unwanted matter that should be removed into the flow path 40, and
a liquid discharge portion 12 that discharges the liquid from the flow path 40, and
the pair of electrodes 31A and 31B are composed of comb-like electrodes. Such a configuration configures, for example, a purification device.

In the case of substituting the unwanted matter removal device of Example 1 with a separation device, this separation device is a separation device including

a separation tank 10,
a pair of electrodes 31A and 31B (a positive electrode 31A and a negative electrode 31B) disposed in the separation tank 10,
a flow path 40 composed of the pair of electrodes 31A and 31B,
a Fenton's reagent introduction portion 13 that introduces a Fenton's reagent into the flow path 40,
a liquid introduction portion 11 that introduces a liquid (specifically, for example, water) containing a substance that should be separated into the flow path 40, and
a liquid discharge portion 12 that discharges the liquid from the flow path 40,
in which the pair of electrodes 31A and 31B are composed of comb-like electrodes. The separation device of the present disclosure will be described in Example 3.

In addition, the unwanted matter or the like in the liquid (that is, the unwanted matter that should be removed or the substance that should be separated) that flows in the flow path 40 is adsorbed (or attached) to the electrodes (the electrode 31A, the electrode 31B or the electrode 31A and the electrode 31B). In the present specification, the concepts of "adsorption" and "attachment" will be collectively expressed as "adsorption" and also include the concept of "separation" or "removal".

In addition, in the unwanted matter removal device (or the separation device) of Example 1, the Fenton's reagent introduction portion 13 includes an introduction portion 14 that introduces a gas or liquid containing an oxygen atom into the flow path 40, the unwanted matter removal device (or the separation device) of Example 1 further includes

a neutralization tank 21 that neutralizes the liquid discharged from the liquid discharge portion 12,
a flocculation tank 22 that flocculates a solid matter in the liquid discharged from the neutralization tank 21, and
a settlement tank 23 that settles the solid matter flocculated in the flocculation tank 22, and,
additionally, further includes
a power supply device 16 that applies a voltage to the pair of electrodes 31A and 31B,
a pH adjuster introduction portion 15 that introduces a pH adjuster for adjusting the pH of the liquid into the flow path 40 and
a monitoring device 17 that monitors the characteristics of the liquid that is discharged from the liquid discharge portion 12.

The Fenton's reagent introduction portion 13, the introduction portion 14 and the pH adjuster introduction portion 15 are disposed so that the Fenton's reagent introduction portion or the pH adjuster can be introduced into, for example, a region in the flow path 40 indicated by "A" in Fig. 2. To the neutralization tank 21 and the flocculation tank 22, stirrers that are rotated with motors M are attached.

Here, specific examples of the gas or liquid containing an oxygen atom include hydrogen peroxide water, specific examples of the pH adjuster include lactic acid, carbon dioxide, succinic acid, gluconic acid, citric acid, phosphoric acid, potassium carbonate, sodium hydrogen carbonate and the like, specific examples of the characteristics of the liquid that should be monitored include whether or not to contain an organic matter, the kind of the organic matter, the concentration of an ion, the kind of the ion, the concentration of a gas, the kind of the gas and the like, and specific examples of the monitoring device 17 include an ion concentration sensor, an organic matter sensor, a bio sensor, a gas sensor and the like. A sensor portion 18 (specifically composed of a semiconductor element, an electrode in which an electrochemical reaction is used or the like) that configures the monitoring device 17 needs to be disposed in the vicinity of the liquid discharge portion 12 in the flow path 40 and needs to be disposed in, for example, a region in the flow path 40 indicated by "B" in Fig. 2.

Each electrode 31A or 31B includes a base portion 32A or 32B and an electrode layer 33A or 33B provided on a surface of the base portion 32A or 32B. In addition, in Example 1, the electrode layer 33A or 33B configuring each of the pair of electrodes 31A and 31B contains a porous carbon material. A conductive material layer (or a conductive substrate) 34A or 34B is sandwiched between the base portion 32A or 32B and the electrode layer 33A or 33B. The shapes of the base portions 32A and 32B, the electrode layers 33A and 33B and the conductive material layers 34A and 34B are the same as the shape of the comb-like electrode. The base portions 32A and 32B were formed of a porous carbon material. In addition, in the electrode layers 33A and 33B (porous carbon material layers) provided on the surface of the base portion 32A, a binder is contained in order to shape the porous carbon material, and, as the binder, carboxymethyl cellulose was used. The porous carbon material may be powdery or granular. Furthermore, the conductive material layers 34A and 34B were formed of conductive carbon (carbon black). In addition, $S_{OI-1}/S_{OI-2}$ was set to 1.0.

The removal tank (separation tank) 10 produced from ceramic is composed of a flat-shaped first member 10A having a side wall 10C formed in the outer circumferential portion and a flat-shaped second member 10B having a side wall 10D formed in the outer circumferential portion, and the side wall 10C of the first member 10A and the side wall 10D of the second member 10B are joined together with an adhesive (not shown). To the inner surfaces of the removal tank (separation tank) 10, lining materials 35 (not hatched) formed of an insulating material are attached.

In a production method of the porous carbon material in Example 1, a rice husk was used as the plant-derived material. In addition, the rice husk, which was the plant-derived material, was solidified using a pellet machine, and, specifically, the plant-derived material solidified into a substantially cylindrical pellet shape that was 6 mm in average diameter and 30 mm in average length was obtained. During the solidification, no binder was used, but a binder may be used. The bulk density of the solidified plant-derived material was 0.2 gram/cm$^3$ to 1.4 gram/cm$^3$ and specifically 0.7 gram/cm$^3$. Next, the plant-derived material was carbonized at 400°C to 1400°C in a solidified state. Specifically, the plant-derived material was carbonized using a mantle heater in a nitrogen atmosphere at 500°C for three hours. The bulk density of the obtained material that had been carbonized in a solidified state (porous carbon material precursor) was 0.2 gram/cm$^3$ to 0.8 gram/cm$^3$ and specifically 0.5 gram/cm$^3$. In addition, the ignition residue of the material that had been carbonized in a solidified state was 42%, and the bulk density of the ignition residue was 0.1 gram/cm$^3$ or more and specifically 0.5 gram/cm$^3$ $\times$ 0.42 = 0.21 gram/cm$^3$. After that, the material that had been carbonized in a solidified state was immersed in a 1 mol/liter sodium hydroxide aqueous solution (80°C) and stirred for 24 hours. Next, the material was cleaned until the material became neutral, and the obtained solidified porous carbon material was filtered and dried at 120°C for 24 hours. In addition, the material was classified using a sieve with a mesh size of 20 and a sieve with a mesh size of 200, thereby obtaining a porous carbon material. On the obtained porous carbon material, an activation treatment based on the gas activation method, specifically, a two-hour activation treatment using water vapor at 900°C may be carried out. A specimen obtained by water vapor activation such that the value of the nitrogen BET method-based surface area became 950 $\pm$ 150 m$^2$/gram was regarded as "Example 1A". The value of the ignition residue of the solidified porous carbon material obtained by the treatment with an acid or an alkali was 0.1 mass% or more and 20 mass% or less, specifically, 9.3 mass%. The bulk density can be obtained based on the measurement method of the packing density described in JIS K1474: 2014 "Test methods for activated carbon". In addition, the same porous carbon material can be obtained by carrying out the water vapor activation treatment on the porous carbon material obtained by carbonizing the rice husk and treating the carbonized rice husk with an acid or an alkali and solidified using the binder with the pellet machine.

The pore distribution based on the mercury intrusion method of the obtained porous carbon material of Example 1A is shown by "A" in Fig. 5. Fig. 5 collectively shows the pore distribution of palm shell activated carbon (Comparative Example 1A) (shown by "B" in Fig. 5) and the pore distribution of coal-based activated carbon (Comparative Example 1B) (shown by "C" in Fig. 5) that were based on the mercury intrusion method. In addition, the characteristics and the like of the obtained porous carbon materials are shown in Table 1 below. In Table 1, "specific surface area" indicates the nitrogen BET method-based surface area (unit: $m^2$/gram), and the unit of the packing density is gram/$cm^3$. In addition, "VBJH" indicates the pore volume of mesopores obtained based on the BJH method, and "VMP" indicates the pore volume of micropores obtained based on the MP method.

[Table 1]

| | Specific surface area | Packing density | $V_{Total}$ | $V_{Macro}$ | $V_{BJH}$ | $V_{MP}$ |
|---|---|---|---|---|---|---|
| Example 1A | 964 | 0.26 | 1.70 | 0.70 | 0.65 | 0.27 |
| Comparative Example 1A | 929 | 0.51 | 0.50 | 0.16 | 0.06 | 0.40 |
| Comparative Example 1B | 1038 | 0.43 | 0.58 | 0.20 | 0.19 | 0.51 |

In Example 1, it was found that the total pore volume $V_{Total}$ of the porous carbon material was 1.0 $cm^3$/gram to 2.0 $cm^3$/gram, the pore volume $V_{Macro}$ of 0.1 pm to 2.0 pm was 0.3 $cm^3$/gram to 1.0 $cm^3$/gram, and the volumes satisfied $0.05 \leq V_{Macro}/V_{Total} \leq 1.0$.

In addition, the obtained porous carbon material was mixed with a binder to be made into a paste form and shaped using a dispenser so as to become comb-like electrodes on the conductive material layers 34A and 34B each having a comb-like electrode shape, and the binder was cured, thereby obtaining the electrode layers 33A and 33B integrated with the conductive material layers 34A and 34B. The electrode layer 33A and the conductive material layer 34A that were obtained as described above and the base portion 32A having a comb-like electrode shape were overlapped and disposed in the first member 10A. In addition, the electrode layer 33B and the conductive material layer 34B that were obtained as described above and the base portion 32B having a comb-like electrode shape were overlapped and disposed in the second member 10B. In addition, the first member 10A and the second member 10B were attached to each other in the side walls 10C and 10D formed in the respective outer circumferential portions of the first member 10A and the second member 10B, which made it possible to obtain a pair of the electrodes 31A and 31B (the positive electrode 31A and the negative electrode 31B) and the flow path 40 composed of the pair of electrodes 31A and 31B. The top portion of the electrode 31A is in contact with the inner surface of the second member 10B, and the top portion of the electrode 31B is in contact with the inner surface of the first member 10A. Alternatively, the electrode layer 33A and the conductive material layer 34A that were obtained as described above and the base portion 32A having a comb-like electrode shape were overlapped, the electrode layer 33B, the conductive material layer 34B and the base portion 32B having a comb-like electrode shape were overlapped, and the layers and the portions were disposed in the first member 10A. In addition, the first member 10A and the second member 10B were attached to each other in the side walls 10C and 10D formed in the respective outer circumferential portions of the first member 10A and the second member 10B, which made it possible to obtain a pair of the electrodes 31A and 31B and the flow path 40 composed of the pair of electrodes 31A and 31B. The top portion of the electrode 31A and the top portion of the electrode 31B are in contact with the inner surface of the second member 10B. The sensor portion 18 is disposed in the flow path (indicated by "B" in Fig. 2) before the first member 10A and the second member 10B are attached to each other.

In addition, the Fenton's reagent introduction portion 13, the introduction portion 14 and the pH adjuster introduction portion 15 were provided in a through hole provided at an appropriate position in the removal tank (separation tank) 10, and the liquid introduction portion 11 and the liquid discharge portion 12 were provided in appropriate positions in the removal tank (separation tank) 10. Furthermore, by an appropriate method, the pair of electrodes 31A and 31B (specifically, the conductive material layers 34A and 34B) were connected to the power supply device 16, the sensor portion 18 was connected to the monitoring device 17, and furthermore, the liquid discharge portion 12 was connected to the neutralization tank 21.

In an unwanted matter removal method (separation method) of Example 1, an unwanted matter or the like was removed or separated from a liquid (specifically water) containing an organic molecule, a high-molecular-weight compound, a protein, a virus, a bacterium, a fungus or the like as the unwanted matter or the like using the unwanted matter removal device (separation device) of Example 1. That is, the liquid is introduced into the flow path 40 from the liquid introduction portion 11, the pH adjuster is introduced into the flow path 40 from the pH adjuster introduction portion 15, and the unwanted matter or the like is adsorbed to both electrodes. In addition, after a certain amount of the unwanted matter or the like is adsorbed to the electrodes, a Fenton's reagent is introduced into the flow path 40 from the Fenton's reagent introduction portion 13 and the introduction portion 14 with a voltage applied to the pair of electrodes 31A and 31B, and the unwanted matter or the like adsorbed to the electrodes is decomposed based on Electro-Fenton reaction. The unwanted matter or the like is mainly decomposed in the negative electrode. The above-described characteristics of the liquid that is discharged from the liquid discharge portion 12 are monitored with the monitoring device 17 including the sensor portion 18, which makes it possible to begin the injection of the Fenton's reagent ($FeSO_4 \cdot 7H_2O$ and $H_2O_2$) and to end the injection of the Fenton's reagent. The removal and separation of the unwanted matter or the like from the liquid are a continuous treatment, and the decomposition of the unwanted matter or the like adsorbed to the electrodes (a recycling treatment of the electrodes) is a kind of batch treatment.

If necessary, a voltage may be applied to the pair of electrodes 31A and 31B, and, in a case where the unwanted matter or the like has a charge due to the application of the voltage, it is possible to more reliably adsorb the unwanted matter or the like having a charge to the electrode having a charge opposite to the charge that the unwanted matter or the like has. For example, a virus having a negative charge is attracted by the positive electrode and adsorbed to the positive electrode. Alternatively, the liquid or the unwanted matter or the like that flows through the flow path is polarized and adsorbed to the electrodes, and an ionic unwanted matter or the like that flows through the flow path is adsorbed to an electrode.

In a state where the unwanted matter or the like has been adsorbed to the electrodes, the liquid discharged from the liquid discharge portion 12 bypasses the neutralization tank 21, a solid matter in the liquid is flocculated in the flocculation tank 22, the solid matter flocculated in the flocculation tank 22 is settled in the settlement tank 23, and the cleansed liquid is released to the outside in the end.

In addition, in a state where the unwanted matter or the like adsorbed to the electrodes has been decomposed based on Electro-Fenton reaction, the liquid discharged from the liquid discharge portion 12 is neutralized in the neutralization tank 21, the solid matter in the liquid is flocculated in the flocculation tank 22, the solid matter flocculated in the flocculation tank 22 is settled in the settlement tank 23, and the cleansed liquid is released to the outside in the end. As a neutralizer that is added to the neutralization tank 21, an acidic neutralizer such as hydrochloric acid, sulfuric acid, acetic acid, citric acid or phosphoric acid is used, as an inorganic flocculant that is added to the flocculation tank 22, aluminum sulfate, polyaluminum chloride (PAC), ferric chlorides, polyferric sulfate, ferrous sulfate and slaked lime (calcium hydroxide) can be used, and, as an organic flocculant, polymer flocculants can be used. The flocculated solid matter is, for example, an iron-based solid matter and can be recycled as the Fenton's reagent in some cases.

In addition, general test water that is used in the adsorption test (removal evaluation test) [General Testing Protocol #6, WHO] of a bacteriophage MS2 was used. That is, from 100 $cm^3$ of a liquid (specified test water) containing 0.1 gram of a bacteriophage MS2 as an unwanted matter or the like, the unwanted matter or the like was removed and separated using the unwanted matter removal device (separation device) of Example 1 based on the Fenton reaction. The number of test points was set to six. Specifically, the flow path 40 in the removal tank (separation tank) 10 shown in Fig. 3 was filled with a liquid containing a bacteriophage MS2, and the viral infectivity [$Log_{10}$ (pfu)/milliliter] was obtained at the time of beginning the test, after 20 minutes passed, after 40 minutes passed and after 60 minutes passed. The results are shown in Fig. 6. Compared with conventional activated carbon, it was possible to remove and separate the bacteriophage MS2 at a significantly high removal rate. Here, in Fig. 6, "A" indicates Example 1A, "B" indicates Comparative Example 1A, and "C" indicates Comparative Example 1B.

In such an unwanted matter removal method (separation method) of Example 1, a kind of water purification filter is composed of the pair of electrodes 31A and 31B and the flow path 40 composed of the pair of electrodes 31A and 31B. In addition, the electrodes, which function as a filter, can be recycled by decomposing the unwanted matter or the like adsorbed to the electrodes based on Electro-Fenton reaction. In addition, it is possible to highly efficiently remove and separate the unwanted matter or the like and to highly purify the unwanted matter or the like with water. Furthermore, even in a state where a voltage is not applied to the pair of electrodes 31A and 31B, it is possible to adsorb an unwanted matter that should be removed (substance that should be separated) to the electrodes by introducing a liquid into the flow path from the liquid introduction portion, and thus powder consumption can be reduced. In addition, it is possible to remove and separate the unwanted matter or the like from the liquid at a low cost and to provide a purification device having a simple configuration or structure.

Even in a configuration where the electrode layer 33A or 33B configuring one of the pair of electrodes 31A and 31B contained a porous carbon material and the electrode layer 33A or 33B configuring the other of the pair of electrodes 31A and 31B contained a carbon-based material (specifically, a porous carbon material and a highly conductive electrode material having a low overvoltage, for example, conductive carbon such as carbon black, boron-doped carbon or the like) or platinum black, since the pair of electrodes 31A and 31B were comb-like electrodes, it was possible to remove the unwanted matter or the like at a high removal rate. Alternatively, even in a configuration where the electrode layers 33A and 33B configuring each of the pair of electrodes 31A and 31B contain the carbon-based material, since the pair of electrodes 31A and 31B were comb-like electrodes, it was possible to remove the unwanted matter or the like at a high removal rate.

A conceptual view of the electrodes and the flow path in the unwanted matter removal device (here, the unwanted matter removal device according to the second aspect) (or separation device) of Example 1 is shown in Fig. 7, and, even in the unwanted matter removal device (or separation device) of Example 1 in which the pair of electrodes 31a and 31b were flat plate-like electrodes parallel to each other and at least one of the pair of electrodes 31a and 31b (both in Example 1) was composed of the base portion 32a or 32b and the electrode layer 33a or 33b provided on the surface of the base portion 32a or 32b and containing the porous carbon material as shown in Fig. 8 of a schematic partial cross-sectional view of the electrodes in the unwanted matter removal device (or separation device) of Example 1 [here, the electrodes in the unwanted matter removal device (or separation device) according to the second aspect of the present disclosure], the unwanted matter or the like (that is, the unwanted matter that should be removed or the substance that should be separated) in the liquid that flowed through a flow path 40' was adsorbed to the electrode (the electrode 31a, the electrode 31b or the electrode 31a and the electrode 31b) with a voltage applied to the pair of electrodes 31a and 31b, whereby the electrode layers 33a and 33b of the electrodes 31a and 31b were composed of the porous carbon material, and a kind of liquid passing-type capacitor (electric double layer capacitor) was composed of the two electrodes 31a and 31b, and thus it was possible to remove and separate the unwanted matter or the like at a high removal rate. A conductive material layer 34a or 34b is sandwiched between the base portion 32a or 32b and the electrode layer 33a or 33b.

In addition, it is also possible to adopt a structure where, for example, one of the electrodes is disposed in the central portion of a cylindrical or tubular removal tank and the other electrode is disposed on the internal surface of the side wall or on the internal wall of the removal tank.

[Example 2]

Example 2 relates to the unwanted matter removal method (separation method) according to the second aspect of the present disclosure. Even in Example 2, the unwanted matter removal device (the unwanted matter removal devices according to the first aspect and the second aspect of the present disclosure) (or separation device) described in Example 1 is used. In the unwanted matter removal method (separation method) of Example 2, an unwanted matter removal method (a separation method of a substance that should be separated) based on Electro-Fenton reaction is executed with the pair of electrodes 31A and 31B or 31a and 31b and the flow path 40 composed of the pair of electrodes 31A and 31B or 31a and 31b.

That is, in a state where a voltage is applied to the pair of electrodes 31A and 31B or 31a and 31b, the liquid is introduced into the flow path 40 from the liquid introduction portion 11, the Fenton's reagent is introduced into the flow path 40 the flow path 40 from the Fenton's reagent introduction portion 13, and, based on Electro-Fenton reaction, the unwanted matter that should be removed in the liquid is decomposed or the substance that should be separated in the liquid is separated and decomposed.

The liquid discharged from the liquid discharge portion 12 is neutralized in the neutralization tank 21, the solid matter in the liquid is flocculated in the flocculation tank 22, the solid matter flocculated in the flocculation tank 22 is settled in the settlement tank 23, and the cleansed liquid is released to the outside in the end.

Even in Example 2, it was possible to highly efficiently remove the unwanted matter or to separate the substance and to highly purify the unwanted matter or the substance with water.

[Example 3]

Example 3 relates to the separation device and the separation method of the present disclosure.

The separation device of Example 3 includes

a separation tank 10,
a pair of electrodes 31A or 31a and 31B or 31b (a positive electrode 31A or 31a and a negative electrode 31B or 31b) disposed in the separation tank 10,
a flow path 40 composed of the pair of electrodes 31A or 31a and 31B or 31b,
a liquid introduction portion 11 that introduces a liquid (specifically, water) containing a substance that should be separated into the flow path 40,
a liquid discharge portion 12 that discharges the liquid from the flow path 40, and
a power supply device 16 that applies a voltage to the pair of electrodes 31A or 31a and 31B or 31b,
in which the pair of electrodes 31A or 31a and 31B or 31b are composed of comb-like electrodes, and
at least one electrode contains a porous carbon material.

The substance that should be separated preferably has a charge. In addition, a space velocity SV to be assumed can be, for example, $1 \times 10^0$ to $1 \times 10^4$ (Hr$^{-1}$). Depending on the situations, for example, when a substance such as poly aluminum chloride is added, it is possible to increase the particle diameters of the substance that should be separated and to charge the substance that should be separated at the same time. In addition, the value of the space velocity SV can also be applied to Example 1 and Example 2.

A conceptual view of the separation device of Example 3 is the same as the conceptual view of the removal layer 10 (including the electrodes 31A, 31a, 31B and 31b, the flow path 40, the liquid introduction portion 11, the liquid discharge portion 12 and the power supply device 16) configuring the unwanted matter removal device of Example 1 shown in Fig. 1. In addition, a conceptual view of the electrodes and the flow path in the separation device of Example 3 is the same as Fig. 2 or Fig. 7, a schematic partial cross-sectional view of the electrodes in the separation device of Example 3 is the same as Fig. 3A and Fig. 3B, a schematic perspective view of the electrodes is the same as Fig. 4, and a schematic partial cross-sectional view of the electrodes in the separation device of Example 3 is the same as Fig. 8A and Fig. 8B.

The separation device of Example 3 substantially has the same configuration and structure as a part of the unwanted matter removal device of Example 1 except that the Fenton's reagent introduction portion 13 that introduces the Fenton's reagent into the flow path 40 and the introduction portion 14 are not provided. The separation device of Example 3 may further include the pH adjuster introduction portion 15 that introduces the pH adjuster for adjusting the pH of the liquid into the flow path. In addition, the separation device may further include the monitoring device 17 that monitors the characteristics of the liquid that is discharged from the liquid discharge portion 12 and the sensor portion 18. Each electrode includes the base portion and the electrode layer provided on the surface of the base portion in the same manner as described in Example 1, the electrode layer configuring one of the pair of electrodes contains the porous carbon material, and the electrode layer configuring the other of the pair of electrodes contains at least one kind of material selected from the group consisting of the above-described materials such as diamond-like carbon. Alternately, the electrode layer configuring each of the pair of electrodes contains the porous carbon material. The characteristics of the porous carbon material are as described in Example 1. The separation device may further include the neutralization tank 21 that neutralizes the liquid discharged from the liquid discharge portion 12, the flocculation tank 22 that flocculates the solid matter in the liquid and the settlement tank 23 that settles the solid matter flocculated in the flocculation tank 22.

As described above, the configuration and structure of the separation device in Example 3 can be made substantially the same as the configuration and structure of a part of the unwanted matter removal device described in Example 1, and thus the separation device of Example 3 will not be described again in detail.

A separation method of Example 3 is a separation method in which the separation device of Example 3 including

the separation tank 10,
the pair of electrodes 31A or 31a and 31B or 31b (the positive electrode 31A or 31a and the negative electrode 31B or 31b) disposed in the separation tank 10, the flow path 40 composed of the pair of electrodes 31A or 31a and 31B or 31b, the liquid introduction portion 11 that introduces the liquid (specifically, water) containing a substance that should be separated into the flow path 40,
the liquid discharge portion 12 that discharges the liquid from the flow path 40, and
the power supply device 16 that applies a voltage to the pair of electrodes 31A or 31a and 31B or 31b,
in which the pair of electrodes 31A or 31a and 31B or 31b are composed of comb-like electrodes, and
at least one electrode contains the porous carbon material, is used,
in which a voltage is applied to the pair of electrodes 31A or 31a and 31B or 31b (the positive electrode 31A or 31a and the negative electrode 31B or 31b) from the power supply device 16, the liquid is introduced into the flow path from the liquid introduction portion 11, and an electric double layer is formed between the substance that should be separated and at least one electrode, whereby the substance that should be separated is separated from the liquid in a vicinity of the electrode in which the electric double layer has been formed. While depending on the charged state, the substance that should be separated is adsorbed to the positive electrode 31A or 31a or to the negative electrode 31B or 31b. The liquid is discharged from the liquid discharge portion 12; however, depending on the situations, the characteristics of the liquid that is discharged from the liquid discharge portion 12 may be monitored and a part or all of the discharged liquid may be appropriately returned to the separation tank 10 from the liquid introduction portion 11. Incidentally, in order to form the electric double layer, components having a charge (a cation and an anion) need to be present in the liquid. In the case of normal water, $H^+$, $H_3O^+$ and $OH^-$ are present. In order to enlarge the electric double layer, for example, the electrode area needs to be increased. Alternatively, when the electrode is composed of the porous carbon material, it is possible to form the electric double layer larger than an electric double layer composed of an electrode having a flat surface.

Specifically, as the state where a voltage is applied to the pair of electrodes 31A or 31a and 31B or 31b, a liquid containing substances that should be separated is introduced into the separation tank 10, whereby a substance that should be separated having a negative charge is adsorbed to the positive electrode 31A or 31a, and a substance that should be separated having a positive charge is adsorbed to the negative electrode 31B or 31b. Alternatively, the liquid or the substance that flows through the flow path is polarized, the substance is adsorbed to the electrodes, and an ionic substance that flows through the flow path is adsorbed to an electrode.

In addition, after a certain amount of the substance is adsorbed to the electrodes, the introduction of the liquid containing the substance that should be separated into the separation tank 10 is stopped, and a liquid for recovery is caused to flow into the separation tank 10 from the liquid introduction portion 11. Next, a reverse voltage is applied to the pair of electrodes 31A or 31a and 31B or 31b. That is, the positive electrode 31A or 31a is given a negative potential. This makes it possible to desorb the substance adsorbed to the positive electrode 31A or 31a from the positive electrode 31A or 31a. The substance desorbed from the positive electrode 31A or 31a is discharged from the liquid discharge portion 12 together with the liquid for recovery. In addition, the substance needs to be recovered from the liquid for recovery by an appropriate method. In addition, similarly, the negative electrode 31B or 31b is given a positive potential. This makes it possible to desorb the substance adsorbed to the negative electrode 31B or 31b from the negative electrode 31B or 31b. The substance desorbed from the negative electrode 31B or 31b is discharged from the liquid discharge portion 12 together with the liquid for recovery.

As a combination of the substance that is adsorbed to the positive electrode 31A or 31a, the liquid for recovery and a recovery method of the substance from the liquid for recovery, the followings can be exemplary examples.

[Case A]

Substance that should be separated and recovered: A virus or bacterium having a negative charge on the surface

Liquid for recovery: Water, low-concentration ethanol mixed water or the like
Recovery method of substance: The substance that should be separated and recovered is recovered by immersing the electrode to which the substance has been adsorbed in the liquid for recovery. In a case where the substance that should be separated and recovered may be inactivated, the substance may be heated.

[Case B]

Substance that should be separated and recovered: A protein or polymer having a negative charge

Liquid for recovery: Water, low-concentration ethanol mixed water, additionally, an organic solvent or the like
Recovery method of substance: The substance that should be separated and recovered is recovered by immersing the electrode to which the substance has been adsorbed in the liquid for recovery. In a case where the structure of the substance that should be separated and recovered may be broken, the substance may be heated.

[Case C]

Substance that should be separated and recovered: An organic molecule having a negative charge on the surface

Liquid for recovery: Water, organic solvent or the like
Recovery method of substance: The substance that should be separated and recovered is recovered by immersing the electrode to which the substance has been adsorbed in the liquid for recovery. The substance may be heated.

[Case D]

Substance that should be separated and recovered: An inorganic ion having a negative charge on the surface

Liquid for recovery: Water, organic solvent or the like
Recovery method of substance: The substance that should be separated and recovered is recovered by immersing the electrode to which the substance has been adsorbed in the liquid for recovery. The substance may be heated.

[Case E]

Substance that should be separated and recovered: A colloid particle having a negative charge on the surface

Liquid for recovery: Water, organic solvent or the like
Recovery method of substance: The substance that should be separated and recovered is recovered by immersing the electrode to which the substance has been adsorbed in the liquid for recovery. The substance may be heated.

As a combination of the substance that is adsorbed to the negative electrode 31B or 31b, the liquid for recovery and a recovery method of the substance from the liquid for recovery, the followings can be exemplary examples.

[Case a]

Substance that should be separated and recovered: A virus or bacterium having a positive charge on the surface

Liquid for recovery: Water, low-concentration ethanol mixed water or the like
Recovery method of substance: The substance that should be separated and recovered is recovered by immersing the electrode to which the substance has been adsorbed in the liquid for recovery. In a case where the substance that should be separated and recovered may be inactivated, the substance may be heated.

[Case b]

Substance that should be separated and recovered: A protein or polymer having a positive charge

Liquid for recovery: Water, low-concentration ethanol mixed water, additionally, an organic solvent or the like
Recovery method of substance: The substance that should be separated and recovered is recovered by immersing the electrode to which the substance has been adsorbed in the liquid for recovery. In a case where the structure of the substance that should be separated and recovered may be broken, the substance may be heated.

[Case c]

Substance that should be separated and recovered: An organic molecule having a positive charge on the surface

Liquid for recovery: Water, organic solvent or the like
Recovery method of substance: The substance that should be separated and recovered is recovered by immersing the electrode to which the substance has been adsorbed in the liquid for recovery. The substance may be heated.

[Case d]

Substance that should be separated and recovered: An inorganic ion having a positive charge on the surface

Liquid for recovery: Water, organic solvent or the like
Recovery method of substance: The substance that should be separated and recovered is recovered by immersing the electrode to which the substance has been adsorbed in the liquid for recovery. The substance may be heated.

[Case e]

Substance that should be separated and recovered: A colloid particle having a positive charge on the surface

Liquid for recovery: Water, organic solvent or the like
Recovery method of substance: The substance that should be separated and recovered is recovered by immersing the electrode to which the substance has been adsorbed in the liquid for recovery. The substance may be heated.

A cation exchange resin may be disposed in the separation tank 10, specifically, in the upstream region of the positive electrode 31A or 31a in the separation tank 10 such that the liquid containing the substance that should be separated passes through the cation exchange resin immediately before the liquid containing the substance that should be separated comes into contact with the positive electrode 31A or 31a, and an anion exchange resin may be disposed in the separation tank 10, specifically, in the upstream region of the negative electrode 31B or 31b in the separation tank 10 such that the liquid containing the substance that should be separated passes through the anion exchange resin immediately before the liquid containing the substance that should be separated comes into contact with the negative electrode 31B or 31b.

Hitherto, the present disclosure has been described based on the preferable examples, but the present disclosure is not limited to these examples and can be modified in a variety of manners. The unwanted matter removal device, the separation device, the unwanted matter removal method and the separation method described in the examples can be modified as appropriate, and the porous carbon material, the raw material (plant-derived material), the production method, the production conditions and the like described in the examples are also exemplary examples and can be modified as appropriate. It is not essential to include the conductive material layers, and, in a case where the base portion is composed of a conductive material, the conductive material layers are not necessary.

The unwanted matter removal devices of the first aspect and the second aspect of the present disclosure make it possible to provide, for example, a high-quality water purification filter or purification device intended to acquire potable water by the purification of water and a high-quality filter or purification device intended to remove a virus, a bacterium, an organic matter or a contaminated substance in contaminated water and acquire recycled water. In addition, these also make is possible to treat liquids that are discharged from a variety of facilities (for example, waste liquids from dishwashing machines or laundry machines and a variety of electric products in which water is used and waste liquid from plants). In addition, the separation device of the present disclosure makes it possible to provide, for example, a recovery device for recovering viruses, bacteria or fungi; a recovery device for recovering a gene, a protein or the like composed of an organic molecule, a polymer substance or an amino acid; a recovery device for recovering an inorganic ion or a colloidal substance having an inorganic ion; a recovery device for recovering a heavy metal ion or a colloidal substance having a heavy metal ion.

The present disclosure is also capable of adopting the following configurations.

[A01] «Unwanted matter removal device ... first aspect»

An unwanted matter removal device including

a removal tank,
a pair of electrodes disposed in the removal tank,
a flow path composed of the pair of electrodes,
a Fenton's reagent introduction portion that introduces a Fenton's reagent into the flow path,
a liquid introduction portion that introduces a liquid containing an unwanted matter that should be removed into the flow path, and
a liquid discharge portion that discharges the liquid from the flow path,
in which the pair of electrodes are composed of comb-like electrodes.

[A02] The unwanted matter removal device according to [A01], in which the Fenton's reagent introduction portion includes an introduction portion that introduces a gas or liquid containing an oxygen atom into the flow path.

[A03] The unwanted matter removal device according to [A01] or [A02], further including a power supply device that applies a voltage to the pair of electrodes.

[A04] The unwanted matter removal device according to any one of [A01] to [A03], further including a pH adjuster introduction portion that introduces a pH adjuster for adjusting the pH of the liquid into the flow path.

[A05] The unwanted matter removal device according to any one of [A01] to [A04], further including a monitoring device that monitors the characteristics of the liquid that is discharged from a liquid discharge portion.

[A06] The unwanted matter removal device according to any one of [A01] to [A05], in which each electrode includes a base portion and an electrode layer provided on a surface of the base portion.

[A07] The unwanted matter removal device according to [A06], in which an electrode layer configuring one of the pair of electrodes contains a porous carbon material, and

an electrode layer configuring the other of the pair of electrodes contains at least one kind of material selected from the group consisting of diamond-like carbon, glassy carbon, carbon fibers, carbon nanotubes, graphene, carbon fibers, activated carbon, carbon black, boron-doped carbon, platinum, gold, silver, platinum black and stainless steel.

[A08] The unwanted matter removal device according to [A06] or [A05], in which an electrode layer configuring each of the pair of electrodes contains a porous carbon material.

[A09] The unwanted matter removal device according to [A07] or [A08], in which a total pore volume $V_{Total}$ of the porous carbon material is 1.0 cm$^3$/gram to 2.0 cm$^3$/gram, a pore volume $V_{Macro}$ of 0.1 pm to 2.0 $\mu$m is 0.3 cm$^3$/gram to 1.0 cm$^3$/gram, and the volumes satisfy $0.05 \leq V_{Macro}/V_{Total} \leq 1.0$.

[A10] The unwanted matter removal device according to any one of [A01] to [A09], further including

a neutralization tank that neutralizes the liquid discharged from the liquid discharge portion,
a flocculation tank that flocculates a solid matter in the liquid discharged from the neutralization tank, and
a settlement tank that settles the solid matter flocculated in the flocculation tank.

[B01] <<Unwanted matter removal device ... second aspect>>

An unwanted matter removal device including

a removal tank,
a pair of electrodes disposed in the removal tank,
a flow path composed of the pair of electrodes,
a Fenton's reagent introduction portion that introduces a Fenton's reagent into the flow path,
a liquid introduction portion that introduces a liquid containing an unwanted matter that should be removed into the flow path, and
a liquid discharge portion that discharges the liquid from the flow path,
in which at least one of the pair of electrodes is composed of a base portion and an electrode layer containing a porous carbon material provided on a surface of the base portion.

[B02] The unwanted matter removal device according to [B01], in which the Fenton's reagent introduction portion includes an introduction portion that introduces a gas or liquid containing an oxygen atom into the flow path.
[B03] The unwanted matter removal device according to [B01] or [B02], further including a power supply device that applies a voltage to the pair of electrodes.
[B04] The unwanted matter removal device according to any one of [B01] to [B03], further including a pH adjuster introduction portion that introduces a pH adjuster for adjusting the pH of the liquid into the flow path.
[B05] The unwanted matter removal device according to any one of [B01] to [B04], further including a monitoring device that monitors the characteristics of the liquid that is discharged from a liquid discharge portion.
[B06] The unwanted matter removal device according to any one of [B01] to [B05], in which an electrode layer configuring each of the pair of electrodes contains a porous carbon material.
[B07] The unwanted matter removal device according to any one of [B01] to [B06], in which a total pore volume $V_{Total}$ of the porous carbon material is 1.0 cm$^3$/gram to 2.0 cm$^3$/gram, a pore volume $V_{Macro}$ of 0.1 $\mu$m to 2.0 $\mu$m is 0.3 cm$^3$/gram to 1.0 cm$^3$/gram, and the volumes satisfy $0.05 \leq V_{Macro}/V_{Total} \leq 1.0$.
[B08] The unwanted matter removal device according to any one of [B01] to [B07], further including

a neutralization tank that neutralizes the liquid discharged from the liquid discharge portion,
a flocculation tank that flocculates a solid matter in the liquid discharged from the neutralization tank, and
a settlement tank that settles the solid matter flocculated in the flocculation tank.

[C01] <<Unwanted matter removal method ... first aspect>>

An unwanted matter removal method in which an unwanted matter removal device including

a removal tank,
a pair of electrodes disposed in the removal tank,
a flow path composed of the pair of electrodes,
a Fenton's reagent introduction portion that introduces a Fenton's reagent into the flow path,
a liquid introduction portion that introduces a liquid containing an unwanted matter that should be removed into the flow path, and
a liquid discharge portion that discharges the liquid from the flow path,
in which the pair of electrodes are composed of comb-like electrodes, is used,
in which the liquid is introduced into the flow path from the liquid introduction portion, the unwanted matter that should be removed is adsorbed to the electrodes, then,
the Fenton's reagent is introduced into the flow path into the flow path from the Fenton's reagent introduction portion with a voltage applied to the pair of electrodes, and the unwanted matter that should be removed adsorbed to the electrodes is decomposed.

[C02] «Unwanted matter removal method ... second aspect»

An unwanted matter removal method in which an unwanted matter removal device including

a removal tank,
a pair of electrodes disposed in the removal tank,
a flow path composed of the pair of electrodes,

a Fenton's reagent introduction portion that introduces a Fenton's reagent into the flow path,
a liquid introduction portion that introduces a liquid containing an unwanted matter that should be removed into the flow path, and
a liquid discharge portion that discharges the liquid from the flow path,
in which the pair of electrodes are composed of comb-like electrodes, is used,
in which the liquid is introduced into the flow path from the liquid introduction portion with a voltage applied to the pair of electrodes, the Fenton's reagent is introduced into the flow path into the flow path from the Fenton's reagent introduction portion, and the unwanted matter that should be removed in the liquid is decomposed.

In addition, the present disclosure can also be applied to separation devices and separation methods as described below.

[D01] <<Separation device ... first aspect>>

A separation device including

a separation tank,
a pair of electrodes disposed in the separation tank,
a flow path composed of the pair of electrodes,
a liquid introduction portion that introduces a liquid containing an unwanted matter that should be removed into the flow path,
a liquid discharge portion that discharges the liquid from the flow path, and a power supply device that applies a voltage to the pair of electrodes.
in which the pair of electrodes are composed of comb-like electrodes.
at least one electrode contains a porous carbon material.

[D02] The separation device according to [D01], in which the substance that should be separated has a charge.
[D03] The separation device according to [D01] or [D02], further including a pH adjuster introduction portion that introduces a pH adjuster for adjusting the pH of the liquid into the flow path.
[D04] The separation device according to any one of [D01] to [D03], further including a monitoring device that monitors the characteristics of the liquid that is discharged from a liquid discharge portion.
[D05] The separation device according to any one of [D01] to [D04], in which each electrode includes a base portion and an electrode layer provided on a surface of the base portion.
[D06] The separation device according to [D05], in which an electrode layer configuring one of the pair of electrodes contains a porous carbon material, and an electrode layer configuring the other of the pair of electrodes contains at least one kind of material selected from the group consisting of diamond-like carbon, glassy carbon, carbon fibers, carbon nanotubes, graphene, carbon fibers, activated carbon, carbon black, boron-doped carbon, platinum, gold, silver, platinum black and stainless steel.
[D07] The separation device according to [D05], in which an electrode layer configuring each of the pair of electrodes contains a porous carbon material.
[D08] The separation device according to any one of [D01] to [D07], in which a total pore volume $V_{Total}$ of the porous carbon material is 1.0 $cm^3$/gram to 2.0 $cm^3$/gram, a pore volume $V_{Macro}$ of 0.1 pm to 2.0 $\mu$m is 0.3 $cm^3$/gram to 1.0 $cm^3$/gram, and the volumes satisfy $0.05 \leq V_{Macro}/V_{Total} \leq 1.0$.

[E01] <<Separation device ... second aspect>>

A separation device including

a separation tank,
a pair of electrodes disposed in the separation tank,
a flow path composed of the pair of electrodes,
a Fenton's reagent introduction portion that introduces a Fenton's reagent into the flow path,
a liquid introduction portion that introduces a liquid containing a substance that should be separated into the flow path, and
a liquid discharge portion that discharges the liquid from the flow path,
in which the pair of electrodes are composed of comb-like electrodes.

[E02] The separation device according to [E01], in which the Fenton's reagent introduction portion includes an introduction portion that introduces a gas or liquid containing an oxygen atom into the flow path.

[E03] The separation device according to [E01] or [E02], further including a power supply device that applies a voltage to the pair of electrodes.

[E04] The separation device according to any one of [E01] to [E03], further including a pH adjuster introduction portion that introduces a pH adjuster for adjusting the pH of the liquid into the flow path.

[E05] The separation device according to any one of [E01] to [E04], further including a monitoring device that monitors the characteristics of the liquid that is discharged from a liquid discharge portion.

[E06] The separation device according to any one of [E01] to [E05], in which each electrode includes a base portion and an electrode layer provided on a surface of the base portion.

[E07] The separation device according to [E06], in which an electrode layer configuring one of the pair of electrodes contains a porous carbon material, and an electrode layer configuring the other of the pair of electrodes contains at least one kind of material selected from the group consisting of diamond-like carbon, glassy carbon, carbon fibers, carbon nanotubes, graphene, carbon fibers, activated carbon, carbon black, boron-doped carbon, platinum, gold, silver, platinum black and stainless steel.

[E08] The separation device according to [E06], in which an electrode layer configuring each of the pair of electrodes contains a porous carbon material.

[E09] The separation device according to [E07] or [E08], in which a total pore volume $V_{Total}$ of the porous carbon material is 1.0 cm$^3$/gram to 2.0 cm$^3$/gram, a pore volume $V_{Macro}$ of 0.1 pm to 2.0 $\mu$m is 0.3 cm$^3$/gram to 1.0 cm$^3$/gram, and the volumes satisfy $0.05 \leq V_{Macro}/V_{Total} \leq 1.0$.

[E10] The unwanted matter removal device according to any one of [E01] to [E09], further including

a neutralization tank that neutralizes the liquid discharged from the liquid discharge portion,
a flocculation tank that flocculates a solid matter in the liquid discharged from the neutralization tank, and
a settlement tank that settles the solid matter flocculated in the flocculation tank.

[F01] <<Separation device ... third aspect>>

A separation device including

a separation tank,
a pair of electrodes disposed in the separation tank,
a flow path composed of the pair of electrodes,
a Fenton's reagent introduction portion that introduces a Fenton's reagent into the flow path,
a liquid introduction portion that introduces a liquid containing a substance that should be separated into the flow path, and
a liquid discharge portion that discharges the liquid from the flow path,
in which at least one of the pair of electrodes is composed of a base portion and an electrode layer containing a porous carbon material provided on a surface of the base portion.

[G01] <<Separation method ... first aspect>>

A separation method in which a separation device including

a separation tank,
a pair of electrodes disposed in the separation tank,
a flow path composed of the pair of electrodes,
a liquid introduction portion that introduces a liquid containing a substance that should be separated into the flow path,
a liquid discharge portion that discharges the liquid from the flow path, and a power supply device that applies a voltage to the pair of electrodes.
in which the pair of electrodes are composed of comb-like electrodes, and at least one electrode contains a porous carbon material, is used,
in which a voltage is applied to the pair of electrodes from the power supply device, the liquid is introduced into the flow path from the liquid introduction portion, and an electric double layer is formed between the substance that should be separated and at least one electrode, whereby the substance that should be separated is separated from the liquid in a vicinity of the electrode in which the electric double layer has been formed.

[G02] <<Separation method ... second aspect>>

A separation method in which a separation device including

a separation tank,
a pair of electrodes disposed in the separation tank,
a flow path composed of the pair of electrodes,
a Fenton's reagent introduction portion that introduces a Fenton's reagent into the flow path,
a liquid introduction portion that introduces a liquid containing a substance that should be separated into the flow path, and
a liquid discharge portion that discharges the liquid from the flow path,
in which the pair of electrodes are composed of comb-like electrodes, is used,
in which the liquid is introduced into the flow path from the liquid introduction portion, the substance that should be separated is adsorbed to the electrodes, then,
the Fenton's reagent is introduced into the flow path into the flow path from the Fenton's reagent introduction portion with a voltage applied to the pair of electrodes, and the substance that should be separated adsorbed to the electrodes is decomposed.

[G03] <<Separation method ... third aspect>>

A separation method in which a separation device including

a separation tank,
a pair of electrodes disposed in the separation tank,
a flow path composed of the pair of electrodes,
a Fenton's reagent introduction portion that introduces a Fenton's reagent into the flow path,
a liquid introduction portion that introduces a liquid containing a substance that should be separated into the flow path, and
a liquid discharge portion that discharges the liquid from the flow path,
in which the pair of electrodes are composed of comb-like electrodes, is used,
in which the liquid is introduced into the flow path from the liquid introduction portion with a voltage applied to the pair of electrodes, the Fenton's reagent is introduced into the flow path into the flow path from the Fenton's reagent introduction portion, and the substance that should be separated in the liquid is decomposed.

[Reference numerals List]

10 Removal tank
11 Liquid introduction portion
12 Liquid discharge portion
13 Fenton's reagent introduction portion
14 Introduction portion
15 pH adjuster introduction portion
16 Power supply device
17 Monitoring device
18 Sensor portion
21 Neutralization tank
22 Flocculation tank
23 Settlement tank
31A, 31a, 31B, 31b Electrode
32A, 32a, 32B, 32b Base portion
33A, 33a, 33B, 33b Electrode layer
34A, 34a, 34B, 34b Conductor layer
35 Lining material
40 Flow path

**Claims**

1. An unwanted matter removal device comprising:

    a removal tank;
    a pair of electrodes disposed in the removal tank;
    a flow path composed of the pair of electrodes;
    a Fenton's reagent introduction portion that introduces a Fenton's reagent into the flow path;
    a liquid introduction portion that introduces a liquid containing an unwanted matter that should be removed into the flow path; and
    a liquid discharge portion that discharges the liquid from the flow path,
    wherein the pair of electrodes are composed of comb-like electrodes.

2. The unwanted matter removal device according to claim 1,
    wherein the Fenton's reagent introduction portion includes an introduction portion that introduces a gas or liquid containing an oxygen atom into the flow path.

3. The unwanted matter removal device according to claim 1, further comprising: a power supply device that applies a voltage to the pair of electrodes.

4. The unwanted matter removal device according to claim 1, further comprising: a pH adjuster introduction portion that introduces a pH adjuster for adjusting the pH of the liquid into the flow path.

5. The unwanted matter removal device according to claim 1, further comprising: a monitoring device that monitors the characteristics of the liquid that is discharged from a liquid discharge portion.

6. The unwanted matter removal device according to claim 1,
    wherein each electrode includes a base portion and an electrode layer provided on a surface of the base portion.

7. The unwanted matter removal device according to claim 6,

    wherein an electrode layer configuring one of the pair of electrodes contains a porous carbon material, and
    an electrode layer configuring the other of the pair of electrodes contains at least one kind of material selected from the group consisting of diamond-like carbon, glassy carbon, carbon fibers, carbon nanotubes, graphene, carbon fibers,
    activated carbon, carbon black, boron-doped carbon, platinum, gold, silver, platinum black and stainless steel.

8. The unwanted matter removal device according to claim 6,
    wherein an electrode layer configuring each of the pair of electrodes contains a porous carbon material.

9. The unwanted matter removal device according to claim 8,
    wherein a total pore volume $V_{Total}$ of the porous carbon material is 1.0 cm$^3$/gram to 2.0 cm$^3$/gram, a pore volume $V_{Macro}$ of 0.1 pm to 2.0 pm is 0.3 cm$^3$/gram to 1.0 cm$^3$/gram, and the volumes satisfy $0.05 \leq V_{Macro}/V_{Total} \leq 1.0$.

10. The unwanted matter removal device according to claim 1, further comprising:

    a neutralization tank that neutralizes the liquid discharged from the liquid discharge portion;
    a flocculation tank that flocculates a solid matter in the liquid discharged from the neutralization tank; and
    a settlement tank that settles the solid matter flocculated in the flocculation tank.

11. An unwanted matter removal device comprising:

    a removal tank;
    a pair of electrodes disposed in the removal tank;
    a flow path composed of the pair of electrodes;
    a Fenton's reagent introduction portion that introduces a Fenton's reagent into the flow path;
    a liquid introduction portion that introduces a liquid containing an unwanted matter that should be removed into the flow path; and

a liquid discharge portion that discharges the liquid from the flow path,
wherein at least one of the pair of electrodes is composed of a base portion and an electrode layer containing a porous carbon material provided on a surface of the base portion.

12. An unwanted matter removal method in which a removal device including

a removal tank,
a pair of electrodes disposed in the removal tank,
a flow path composed of the pair of electrodes,
a Fenton's reagent introduction portion that introduces a Fenton's reagent into the flow path,
a liquid introduction portion that introduces a liquid containing an unwanted matter that should be removed into the flow path, and
a liquid discharge portion that discharges the liquid from the flow path,
in which the pair of electrodes are composed of comb-like electrodes, is used,
wherein the liquid is introduced into the flow path from the liquid introduction portion, the unwanted matter that should be removed is adsorbed to the electrodes, then,
the Fenton's reagent is introduced into the flow path into the flow path from the Fenton's reagent introduction portion with a voltage applied to the pair of electrodes, and the unwanted matter that should be removed adsorbed to the electrodes is decomposed.

13. An unwanted matter removal method in which an unwanted matter removal device including

a removal tank,
a pair of electrodes disposed in the removal tank,
a flow path composed of the pair of electrodes,
a Fenton's reagent introduction portion that introduces a Fenton's reagent into the flow path,
a liquid introduction portion that introduces a liquid containing an unwanted matter that should be removed into the flow path, and
a liquid discharge portion that discharges the liquid from the flow path,
in which the pair of electrodes are composed of comb-like electrodes, is used,
wherein the liquid is introduced into the flow path from the liquid introduction portion with a voltage applied to the pair of electrodes, the Fenton's reagent is introduced into the flow path into the flow path from the Fenton's reagent introduction portion, and the unwanted matter that should be removed in the liquid is decomposed.

14. A separation device comprising:

a separation tank;
a pair of electrodes disposed in the separation tank;
a flow path composed of the pair of electrodes;
a liquid introduction portion that introduces a liquid containing a substance that should be separated into the flow path;
a liquid discharge portion that discharges the liquid from the flow path; and
a power supply device that applies a voltage to the pair of electrodes,
wherein the pair of electrodes are composed of comb-like electrodes, and
at least one electrode contains a porous carbon material.

15. A separation method in which a separation device including

a separation tank,
a pair of electrodes disposed in the separation tank,
a flow path composed of the pair of electrodes,
a liquid introduction portion that introduces a liquid containing a substance that should be separated into the flow path,
a liquid discharge portion that discharges the liquid from the flow path, and
a power supply device that applies a voltage to the pair of electrodes,
in which the pair of electrodes are composed of comb-like electrodes, and
at least one electrode contains a porous carbon material, is used,
wherein a voltage is applied to the pair of electrodes from the power supply device, the liquid is introduced into the flow path from the liquid introduction portion, and an electric double layer is formed between the substance that should be separated and at least one electrode, whereby the substance that should be separated is separated from the liquid in a vicinity of the electrode in which the electric double layer has been formed.

Fig. 1

Fig. 2

Fig. 3A

Fig. 3B

Fig. 4

31A

33A  34A

32A

Fig. 5

Fig. 6

Fig. 7

Fig. 8A

Fig. 8B

## INTERNATIONAL SEARCH REPORT

International application No.

PCT/JP2021/003858

### A. CLASSIFICATION OF SUBJECT MATTER
Int. Cl. B01J20/20(2006.01)i, B01J20/28(2006.01)i, B01J20/34(2006.01)i, C02F1/28(2006.01)i, C02F1/461(2006.01)i, C02F1/48(2006.01)i, C02F1/72(2006.01)i
FI: C02F1/48 B, C02F1/72 Z, C02F1/28 D, B01J20/20 B, B01J20/34 Z, C02F1/28 F, C02F1/28 A, B01J20/20 E, B01J20/28 Z, C02F1/461 101C

According to International Patent Classification (IPC) or to both national classification and IPC

### B. FIELDS SEARCHED

Minimum documentation searched (classification system followed by classification symbols)
Int. Cl. B01J20/20, B01J20/28, B01J20/34, C02F1/28, C02F1/461, C02F1/48, C02F1/72

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2017-60942 A (KYOTO UNIVERSITY) 30 March 2017, claims, paragraphs [0019]-[0062], examples, fig. 1-6 | 1-15 |
| X | JP 2005-193202 A (KURITA WATER INDUSTRIES LTD.) 21 July 2005, claims, paragraphs [0008]-[0031], fig. 1 | 11 |
| Y | | 1-15 |
| Y | JP 2012-161794 A (DAIKIN INDUSTRIES, LTD.) 30 August 2012, claims, paragraphs [0050], [0068]-[0114], fig. 6-13 | 1-15 |
| Y | JP 2016-106027 A (SHARP CORP.) 16 June 2016, claims, paragraphs [0020], [0022], [0042]-[0055], fig. 2, 6 | 1-15 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16.03.2021 | 06.04.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2021/003858

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2004-181446 A (KURITA WATER INDUSTRIES LTD.) 02 July 2004, claims, paragraphs [0023]-[0035], fig. 2-4 | 1-15 |
| Y | JP 2004-514637 A (CECA SA) 20 May 2004, claims, paragraphs [0008], [0011], [0014] | 9, 15 |
| Y | CN 209010294 U (JIANGSU CHINA ELECTRONICS INNOVATION ENVIRONMENTAL TECHNOLOGY CO., LTD.) 21 June 2019, claims, paragraphs [0013]-[0015], fig. 1 | 10 |

Form PCT/ISA/210 (continuation of second sheet) (January 2015)

**INTERNATIONAL SEARCH REPORT**
Information on patent family members

| | International application No. |
|---|---|
| | PCT/JP2021/003858 |

| Patent Documents referred to in the Report | Publication Date | Patent Family | Publication Date |
|---|---|---|---|
| JP 2017-60942 A | 30.03.2017 | (Family: none) | |
| JP 2005-193202 A | 21.07.2005 | (Family: none) | |
| JP 2012-161794 A | 30.08.2012 | (Family: none) | |
| JP 2016-106027 A | 16.06.2016 | (Family: none) | |
| JP 2004-181446 A | 02.07.2004 | (Family: none) | |
| JP 2004-514637 A | 20.05.2004 | US 2005/0014643 A1 claims, paragraphs [0010], [0016], [0022], [0023] WO 2002/043088 A2 EP 1340237 A2 CN 1554102 A KR 10-2003-0051875 A | |
| CN 209010294 U | 21.06.2019 | (Family: none) | |

Form PCT/ISA/210 (patent family annex) (January 2015)

**REFERENCES CITED IN THE DESCRIPTION**

**Patent documents cited in the description**

- WO 2017014695 A1